(19) **Europäisches Patentamt / European Patent Office / Office européen des brevets**

(11) **EP 4 572 071 A1**

(12) **EUROPEAN PATENT APPLICATION**
published in accordance with Art. 153(4) EPC

(43) Date of publication:
**18.06.2025 Bulletin 2025/25**

(21) Application number: **23856202.9**

(22) Date of filing: **12.06.2023**

(51) International Patent Classification (IPC):
***H02J 3/38*** (2006.01)

(52) Cooperative Patent Classification (CPC):
**Y02E 10/56**

(86) International application number:
**PCT/CN2023/099663**

(87) International publication number:
**WO 2024/041110 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 CN 202211024308**

(71) Applicant: **Huawei Digital Power Technologies Co., Ltd.**
**Shenzhen, Guangdong 518043 (CN)**

(72) Inventors:
- **ZHANG, Meiqing**
  **Shenzhen, Guangdong 518043 (CN)**
- **DONG, Mingxuan**
  **Shenzhen, Guangdong 518043 (CN)**
- **YU, Xinyu**
  **Shenzhen, Guangdong 518043 (CN)**
- **XIN, Kai**
  **Shenzhen, Guangdong 518043 (CN)**

(74) Representative: **Epping - Hermann - Fischer**
**Patentanwaltsgesellschaft mbH**
**Schloßschmidstraße 5**
**80639 München (DE)**

(54) **PHOTOVOLTAIC POWER GENERATION SYSTEM AND CONTROL METHOD THEREFOR**

(57) A photovoltaic power generation system and a photovoltaic power generation system control method are disclosed, to implement fast frequency support. The photovoltaic power generation system includes: a direct current converter, configured to connect an output of a photovoltaic module and perform voltage conversion on a direct current output by the photovoltaic module; an inverter, configured to convert a direct current output by the direct current converter into an alternating current and output the alternating current to a power grid; and a first controller, configured to generate a first drive signal based on two of a first voltage of the direct current of the direct current converter, an active power output by the inverter, and an operating parameter of the power grid, and control an operating state of the inverter based on the first drive signal.

FIG. 2

**Description**

**CROSS-REFERENCE TO RELATED APPLICATIONS**

This application claims priority to Chinese Patent Application No. 202211024308.0, filed with the China National Intellectual Property Administration on August 24, 2022 and entitled "PHOTOVOLTAIC POWER GENERATION SYSTEM AND PHOTOVOLTAIC POWER GENERATION SYSTEM CONTROL METHOD", which is incorporated herein by reference in its entirety.

**TECHNICAL FIELD**

This application relates to the photovoltaic field, and in particular, to a photovoltaic power generation system and a photovoltaic power generation system control method.

**BACKGROUND**

With gradual promotion of a new national energy security strategy for building a new power system focused on new energy, roles of new energy power generation systems such as wind power and photovoltaic power generation systems in a power grid gradually change from supporting power supplies to primary power supplies. Therefore, higher requirements are imposed on new energy devices. With a rapid increase of a penetration rate of photovoltaic installed capacity in the power grid, a support capability of a photovoltaic device to the power grid becomes essential to security and stability of a power system. However, in a current photovoltaic construction project, the photovoltaic device generally has no active support capability to a power grid frequency and a voltage of the power grid. Consequently, a problem of system instability is easily caused in some scenarios of high-penetration rate, large-scale, and long-distance photovoltaic transmission over a long transmission line. In addition, when a low-frequency or over-frequency event occurs in the power grid, the new energy power system may be disconnected from the power grid.

**SUMMARY**

This application provides a photovoltaic power generation system and a photovoltaic power generation system control method, to implement fast frequency support.

According to a first aspect, an embodiment of this application provides a photovoltaic power generation system, including a direct current converter, an inverter, and an inverter controller.

The direct current converter is configured to connect an output of a photovoltaic module and perform voltage conversion on a direct current output by the photovoltaic module; the inverter is configured to convert a direct current output by the direct current converter into an alternating current and output the alternating current to a power grid; and the first controller is configured to generate a first drive signal based on two of a first voltage of the direct current output by the direct current converter, an active power output by the inverter, and an operating parameter of the power grid, and control an operating state of the inverter based on the first drive signal. The first voltage is a voltage amplitude of the direct current output by the direct current converter, and the operating parameter of the power grid includes one or more of a reactive current, an active current, a reactive power, an active power, a voltage amplitude, and a power grid frequency.

According to the photovoltaic power generation system provided in this embodiment of this application, when the power grid frequency changes, an amplitude of the first voltage changes, and the active power output by the inverter also causes a change of the power grid frequency. That is, the foregoing three parameters affect each other. Therefore, when detecting that the power grid deviates from a rated frequency during normal operation of the power grid, the first controller may generate a corresponding drive signal based on any two of the foregoing three parameters, and adjust the operating state of the inverter, so that the alternating current output by the inverter can implement a frequency support function.

In a possible design, the first controller is specifically configured to: generate a first active power control signal based on a first voltage difference and a first frequency difference; and generate the first drive signal based on the first active power control signal and the operating parameter of the power grid. The first voltage is the voltage amplitude of the direct current output by the direct current converter, and the operating parameter of the power grid includes one or more of the reactive current, the active current, the reactive power, the active power, the voltage amplitude, and the power grid frequency.

According to the foregoing photovoltaic power generation system, droop control between the active power output by the inverter and the direct current voltage may be performed based on the first voltage difference between the first voltage and the first reference voltage, droop control between the active power output by the inverter and the power grid frequency may be performed based on a frequency difference, and an active power for implementing frequency support is determined according to the foregoing two droop control policies.

In a possible design, the first controller is specifically configured to: generate a first modulated wave signal based on the first active power control signal and the operating parameter of the power grid; and generate the first drive signal based on the first modulated wave signal and a first carrier signal, where the first carrier signal is a sine wave signal with a fixed period or a pulse signal.

According to the photovoltaic power generation system, the first carrier signal is adjusted based on the first modulated wave signal for controlling an output power of the inverter, to obtain the first drive signal for controlling a conduction time sequence of switching transistors in the inverter, so as to adjust the active power output by the inverter.

In a possible design, the first controller is specifically configured to: obtain a first power based on the first voltage difference and a first droop coefficient, where the first droop coefficient is determined based on a correspondence between the direct current output by the direct current converter and the active power output by the inverter; obtain a second power based on the first frequency difference and a second droop coefficient, where the second droop coefficient is determined based on a correspondence between the power grid frequency and the active power output by the inverter; and generate the first active power control signal based on the first power, the second power, and a third power. The third power is an initial active power delivered by a plant management system, and the plant management system is configured to control an operating state of the photovoltaic power generation system.

According to the foregoing photovoltaic power generation system, an appropriate droop curve is selected for the correspondence between the power grid frequency and the active power output by the inverter and the correspondence between the direct current voltage output by the direct current converter and the active power output by the inverter, to improve frequency support effect.

In a possible design, the first controller is further configured to: obtain the power grid frequency and the first voltage in a process of controlling the operating state of the inverter based on the first drive signal; and when it is determined that the power grid frequency obtained this time is the same as a power grid frequency obtained at an adjacent time and that the first voltage obtained this time is greater than a first voltage obtained last time, adjust the first drive signal, to increase an active power output by the photovoltaic power generation system, where the active power output by the photovoltaic power generation system is less than or equal to a first specified value after the first drive signal is adjusted, and the first specified value is a maximum active power output by the photovoltaic power generation system during normal operation of the power grid.

According to the foregoing photovoltaic power generation system, when the power grid frequency remains unchanged and the first voltage output by the direct current converter increases, an active power output by the direct current converter to the inverter increases, and the active power output by the photovoltaic power generation system may be controlled without affecting operation of the power grid, to increase.

In a possible design, the first controller is further configured to: obtain the power grid frequency and the first voltage in a process of controlling the operating state of the inverter based on the first drive signal; and when it is determined that the first voltage obtained this time is the same as a first voltage obtained at an adjacent time and that the power grid frequency obtained this time is greater than a power grid frequency obtained last time, adjust the first drive signal, to reduce an active power output by the photovoltaic power generation system, where the active power output by the photovoltaic power generation system is greater than or equal to a second specified value after the first drive signal is adjusted, and the second specified value is a minimum active power output by the photovoltaic power generation system during normal operation of the power grid.

According to the foregoing photovoltaic power generation system, when the power grid frequency increases, it indicates that the active power output by the photovoltaic power generation system increases. Correspondingly, when the power grid frequency decreases, the active power output by the photovoltaic power generation system decreases. To avoid affecting operation of the power grid, when the power grid frequency increases, the active power output by the photovoltaic power generation system may be controlled to decrease.

In a possible design, the first controller is specifically configured to: generate a first voltage control signal based on a first power difference and a second frequency difference; and generate the first drive signal based on the first voltage control signal and the operating parameter of the power grid. The first power difference is a difference between the active power output by the inverter and a first reference power, the second frequency difference is a difference between the power grid frequency and a second reference frequency, the first reference power is a rated active power output by the inverter during normal operation of the power grid, and the first reference frequency is a rated frequency during normal operation of the power grid.

According to the photovoltaic power generation system, droop control between the active power output by the inverter and the direct current voltage may be performed based on the first power difference, and droop control between the power grid frequency and the direct current voltage may be performed based on the second frequency difference; a direct current voltage amplitude for controlling a drive signal of the inverter is determined according to the foregoing two droop control policies; and the drive signal of the inverter is controlled, to implement fast frequency support.

In a possible design, the first controller is specifically configured to: generate a second modulated wave signal based on the first voltage control signal and the operating parameter of the power grid; and generate the first drive signal based on the second modulated wave signal and a second carrier signal, where the second carrier signal is a sine wave signal with a fixed period or a pulse signal.

According to the photovoltaic power generation system, the second carrier signal is adjusted based on the second modulated wave signal for controlling an output power of the inverter, to obtain the first drive signal for controlling a conduction time sequence of switching transistors in the inverter, so as to adjust an output parameter of the inverter. In a possible design, the first controller is specifically configured to: obtain a first direct current voltage based on the first power difference and a third droop coefficient, where the third droop coefficient is determined based on a correspondence between an active power output by the direct current converter and the direct current output by the direct current converter; obtain a second direct current voltage based on the second frequency difference and a fourth droop coefficient, where the fourth droop coefficient is determined based on a correspondence between the power grid frequency and the direct current output by the direct current converter; and generate the first voltage control signal based on the first direct current voltage, the second direct current voltage, and a third direct current voltage, where the third direct current voltage is an initial direct current voltage delivered by a plant management system, and the plant management system is configured to control an operating state of the photovoltaic power generation system.

According to the foregoing photovoltaic power generation system, an appropriate droop curve is selected for a correspondence between the power grid frequency and the first voltage output by the direct current converter and a correspondence between the active power output by the inverter and the first voltage output by the direct current converter, to improve frequency support effect.

In a possible design, the first controller is further configured to: in a process of controlling the operating state of the inverter based on the first drive signal, obtain the power grid frequency and the active power output by the inverter; and when it is determined that the active power, output by the inverter, obtained this time is the same as an active power, output by the inverter, obtained at an adjacent time and that the power grid frequency obtained this time is greater than a power grid frequency obtained last time, adjust the first drive signal, to increase the first voltage output by the direct current converter and reduce an active power output by the photovoltaic power generation system. The active power output by the photovoltaic power generation system is greater than or equal to a third specified value after the first drive signal is adjusted, and the third specified value is a minimum active power output by the photovoltaic power generation system during normal operation of the power grid.

According to the foregoing photovoltaic power generation system, when the power grid frequency increases, it indicates that the active power output by the photovoltaic power generation system exceeds a requirement of the power grid for electric energy. To avoid affecting operation of the power grid, when the power grid frequency increases, the active power output by the photovoltaic power generation system may be controlled to decrease.

In a possible design, the first controller is further configured to: in a process of controlling the operating state of the inverter based on the first drive signal, obtain the power grid frequency and the active power output by the inverter; and when it is determined that the power grid frequency obtained this time is the same as a power grid frequency obtained at an adjacent time and that the active power, output by the inverter, obtained this time is greater than an active power, output by the inverter, obtained last time, adjust the first drive signal, to increase the first voltage output by the direct current converter and reduce an active power output by the photovoltaic power generation system, where the active power output by the photovoltaic power generation system is greater than or equal to a fourth specified value after the first drive signal is adjusted, and the fourth specified value is a minimum active power output by the photovoltaic power generation system during normal operation of the power grid.

According to the foregoing photovoltaic power generation system, to prevent the active power output by the photovoltaic power generation system from increasing and exceeding the requirement of the power grid for the electric energy, when it is detected that the active power output by the photovoltaic power generation system increases, the first drive signal may be adjusted to control the active power output by the photovoltaic power generation system to decrease, so as to implement stable operation of the power grid.

In a possible design, the first controller is specifically configured to: generate a first frequency control signal based on a second power difference and a second voltage difference; and generate the first drive signal based on the first frequency control signal and the operating parameter of the power grid. The second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid.

According to the photovoltaic power generation system, droop control between the power grid frequency and the active power output by the inverter may be performed based on the second power difference, and droop control between the power grid frequency and the first voltage output by the direct current converter may be performed based on the second voltage difference; a frequency output by the inverter is determined according to the foregoing two droop control policies; and the frequency output by the inverter is adjusted, to achieve frequency support effect.

In a possible design, the first controller is specifically configured to: generate a third modulated wave signal based on the first frequency control signal and the operating parameter of the power grid; and generate the first drive signal based on the third modulated wave signal and a third carrier signal, where the third carrier signal is a sine wave signal with a fixed period or a pulse signal.

According to the photovoltaic power generation system, the third carrier signal is adjusted based on the third modulated wave signal for controlling an output power of the inverter, to obtain the first drive signal for controlling a conduction time sequence of switching transistors in the inverter, so as to adjust an output parameter of the inverter. In a possible design, the first controller is specifically configured to: generate a first frequency based on the second power difference and a fifth droop coefficient, where the fifth droop coefficient is determined based on a correspondence between the active power output by the inverter and the power grid frequency; generate a second frequency based on the second voltage difference and a sixth droop coefficient, where the sixth droop coefficient is determined based on a correspondence between the direct current output by the direct current converter and the power grid frequency; and generate the first frequency control signal based on the first frequency, the second frequency, and a third frequency. The third frequency is an initial frequency delivered by a plant management system, and the plant management system is configured to control an operating state of the photovoltaic power generation system.

According to the foregoing photovoltaic power generation system, an appropriate droop curve is selected for the correspondence between the power grid frequency and the active power output by the inverter and the correspondence between the first voltage output by the direct current converter and the power grid frequency, to improve frequency support effect.

In a possible design, the first controller is further configured to: in a process of controlling the operating state of the inverter based on the first drive signal, obtain the first voltage and the active power output by the inverter; and when it is determined that the active power, output by the inverter, obtained this time is the same as an active power, output by the inverter, obtained at an adjacent time and that the first voltage obtained this time is greater than a first voltage obtained last time, adjust the first drive signal, to increase a frequency of the alternating current output by the inverter and increase an active power output by the photovoltaic power generation system. After the first drive signal is adjusted, the active power output by the photovoltaic power generation system is less than or equal to a fifth specified value and the power grid frequency is less than or equal to a maximum frequency during normal operation of the power grid. The fifth specified value is a maximum active power output by the photovoltaic power generation system during normal operation of the power grid.

According to the foregoing photovoltaic power generation system, when the first voltage output by the direct current converter increases, an active power output by the direct current converter to the inverter increases, and the active power output by the photovoltaic power generation system may be controlled without affecting operation of the power grid, to increase.

In a possible design, the first controller is further configured to: in a process of controlling the operating state of the inverter based on the first drive signal, obtain the first voltage and the active power output by the inverter; and when it is determined that the first voltage obtained this time is the same as a first voltage obtained at an adjacent time and that the active power, output by the inverter, obtained this time is greater than an active power, output by the inverter, obtained last time, adjust the first drive signal, to reduce a frequency of the alternating current output by the inverter and reduce an active power output by the photovoltaic power generation system. After the first drive signal is adjusted, the active power output by the photovoltaic power generation system is greater than or equal to a sixth specified value and the power grid frequency is greater than or equal to a minimum frequency during normal operation of the power grid. The sixth specified value is a minimum active power output by the photovoltaic power generation system during normal operation of the power grid.

In a possible design, the photovoltaic power generation system further includes a second controller connected to the direct current converter, and is configured to: generate a second drive signal based on a third voltage difference, and control, based on the second drive signal, the active power output by the direct current converter. The third voltage difference is a difference between a third reference voltage and the first voltage, and the third reference voltage is the rated voltage output by the direct current converter during normal operation of the power grid.

According to the foregoing photovoltaic power generation system, because the inverter is connected to the direct current converter, in other words, the active power output by the inverter is mainly supplied by the direct current converter, a direct current controller may adjust the active power output by the direct current converter, so that the inverter can output the active power for implementing frequency support. In this way, the output active power meets a frequency support requirement. In addition, because the second controller may directly determine the power grid frequency based on the first voltage, the power grid frequency does not need to be obtained through a high-speed transmission line. This increases a frequency support speed of the photovoltaic power generation system.

In a possible design, the second controller is specifically configured to: determine an operating mode of the direct current converter, where the operating mode includes a unidirectional support mode and a bidirectional support mode; generate the third reference voltage based on the operating mode of the direct current converter and an operating parameter of the direct current converter, where the operating parameter of the direct current converter includes one or more of an input current, an input voltage, and an input power; obtain a fourth power based on the third voltage difference and a seventh droop coefficient, where the seventh droop coefficient is determined based on a correspondence between the output voltage of the direct current converter and the active power output by the direct current converter; determine a second active power control signal based on the fourth power and a maximum power; and generate the second drive signal based on the second active power control signal and an input parameter of the direct current converter.

According to the foregoing photovoltaic power generation system, when the power grid frequency increases, the output voltage of the direct current converter increases. Correspondingly, when the power grid frequency decreases, the output voltage of the direct current converter decreases. Therefore, a current power grid status may be determined based on the second voltage difference between the voltage output by the direct current converter and the reference voltage, and corresponding power adjustment is performed, to implement frequency support.

In a possible design, the second controller is further configured to calculate the maximum power MPPE based on the operating parameter of the direct current converter.

According to the foregoing photovoltaic power generation system, the direct current converter operates in an MPPT mode without frequency support, and outputs the maximum power. When power grid frequency support is needed, the maximum power may be estimated based on the MPPE, and power adjustment is performed based on the maximum power.

In a possible design, the second controller is specifically configured to: determine an additional reserved power based on the operating mode of the direct current converter; and generate the third reference voltage based on the operating parameter of the direct current converter and the additional reserved power.

According to the foregoing photovoltaic power generation system, an output power of the direct current converter may be determined based on the operating parameter of the direct current converter and a specified additional reserved power, to dynamically adjust a reference voltage.

According to a second aspect, an embodiment of this application provides a photovoltaic power generation system control method. The method may be applied to a photovoltaic power generation system, and specifically includes the following steps: monitoring an operating parameter of a power grid, a first voltage output by an inverter, and an active power output by a direct current converter; and generating a first drive signal based on two of the first voltage, the active power output by the direct current converter, and the operating parameter of the power grid, and controlling an operating state of the inverter based on the first drive signal, where the first voltage is a voltage amplitude of a direct current output by the direct current converter, and the operating parameter of the power grid includes one or more of a reactive current, an active current, a reactive power, an active power, a voltage amplitude, and a power grid frequency. In a possible design, the generating a first drive signal based on two of the first voltage, the active power output by the inverter, and the operating parameter of the power grid includes: generating a first active power control signal based on a first voltage difference and a first frequency difference, where the first voltage difference is a difference between the first voltage and a first reference voltage, the first frequency difference is a difference between the power grid frequency and a first reference frequency, the first reference voltage is a rated voltage output by the direct current converter during normal operation of the power grid, and the first reference frequency is a rated frequency during normal operation of the power grid; and generating the first drive signal based on the first active power control signal and the operating parameter of the power grid.

In a possible design, the generating the first drive signal based on the first active power control signal and the operating parameter of the power grid includes: generating a first modulated wave signal based on the first active power control signal and the operating parameter of the power grid; and generating the first drive signal based on the first modulated wave signal and a first carrier signal, where the first carrier signal is a sine wave signal with a fixed period or a pulse signal.

In a possible design, the generating a first active power control signal based on a first voltage difference and a first frequency difference includes: obtaining a first power based on the first voltage difference and a first droop coefficient, where the first droop coefficient is determined based on a correspondence between the direct current voltage output by the direct current converter and the active power output by the direct current converter; obtaining a second power based on the first frequency difference and a second droop coefficient, where the second droop coefficient is determined based on a correspondence between the power grid frequency and the active power output by the inverter; and generating the first active power control signal based on the first power, the second power, and a third power, where the third power is an initial active power delivered by a plant management system, and the plant management system is configured to control an operating state of the photovoltaic power generation system.

In a possible design, the method further includes: obtaining the power grid frequency and the first voltage in a process of controlling the operating state of the inverter based on the first drive signal; and when it is determined that the power grid frequency obtained this time is the same as a power grid frequency obtained at an adjacent time and that the first voltage obtained this time is greater than a first voltage obtained last time, adjusting the first drive signal, to increase an active power output by the photovoltaic power generation system, where the active power output by the photovoltaic power generation system is less than or equal to a first specified value after the first drive signal is adjusted, and the first specified value is a maximum active power output by the photovoltaic power generation system during normal operation of the power grid.

In a possible design, the method further includes: obtaining the power grid frequency and the first voltage in a process of controlling the operating state of the inverter based on the first drive signal; and when it is determined that the first voltage obtained this time is the same as a first voltage obtained at an adjacent time and that the power grid frequency obtained this time is greater than a power grid frequency obtained last time, adjusting the first drive signal, to reduce an active power output by the photovoltaic power generation system. The active power output by the photovoltaic power generation system is greater than or equal to a second specified value after the first drive signal is adjusted, and the second specified value is a minimum active power output by the photovoltaic power generation system during normal operation of the power grid.

In a possible design, the generating a first drive signal based on two of the first voltage, the active power output by the inverter, and the operating parameter of the power grid includes: generating a first voltage control signal based on a first power difference and a second frequency difference, where the first power difference is a difference between the active power output by the inverter and a first reference power, the second frequency difference is a difference between the power grid frequency and a second reference frequency, the first reference power is a rated active power output by the inverter during normal operation of the power grid, and the first reference frequency is a rated frequency during normal operation of the power grid; and generating the first drive signal based on the first voltage control signal and the operating parameter of the power grid.

In a possible design, the generating the first drive signal based on the first voltage control signal and the operating parameter of the power grid includes: generating a second modulated wave signal based on the first voltage control signal and the operating parameter of the power grid; and generating the first drive signal based on the second modulated wave signal and a second carrier signal, where the second carrier signal is a sine wave signal with a fixed period or a pulse signal.

In a possible design, the generating a first voltage control signal based on a first power difference and a second frequency difference includes: obtaining a first direct current voltage based on the first power difference and a third droop coefficient, where the third droop coefficient is determined based on a correspondence between an active power output by the direct current converter and the direct current output by the direct current converter; obtaining a second direct current voltage based on the second frequency difference and a fourth droop coefficient, where the fourth droop coefficient is determined based on a correspondence between the power grid frequency and the direct current output by the direct current converter; and generating the first voltage control signal based on the first direct current voltage, the second direct current voltage, and a third direct current voltage, where the third direct current voltage is an initial direct current voltage delivered by a plant management system, and the plant management system is configured to control an operating state of the photovoltaic power generation system.

In a possible design, the method further includes: in a process of controlling the operating state of the inverter based on the first drive signal, obtaining the power grid frequency and the active power output by the inverter; and when it is determined that the active power, output by the inverter, obtained this time is the same as an active power, output by the inverter, obtained at an adjacent time and that the power grid frequency obtained this time is greater than a power grid frequency obtained last time, adjusting the first drive signal, to increase the first voltage output by the direct current converter and reduce an active power output by the photovoltaic power generation system. The active power output by the photovoltaic power generation system is greater than or equal to a third specified value after the first drive signal is adjusted, and the third specified value is a minimum active power output by the photovoltaic power generation system during normal operation of the power grid.

In a possible design, the method further includes: in a process of controlling the operating state of the inverter based on the first drive signal, obtaining the power grid frequency and the active power output by the inverter; and when it is determined that the power grid frequency obtained this time is the same as a power grid frequency obtained at an adjacent time and that the active power, output by the inverter, obtained this time is greater than an active power, output by the inverter, obtained last time, adjusting the first drive signal, to increase the first voltage output by the direct current converter and reduce an active power output by the photovoltaic power generation system. The active power output by the photovoltaic power generation system is greater than or equal to a fourth specified value after the first drive signal is adjusted, and the fourth specified value is a minimum active power output by the photovoltaic power generation system during normal operation of the power grid.

In a possible design, the generating a first drive signal based on two of the first voltage, the active power output by the inverter, and the operating parameter of the power grid includes: generating a first frequency control signal based on a second power difference and a second voltage difference, where the second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid; and generating the first drive signal based on the first frequency control signal and the operating parameter of the power grid.

In a possible design, the generating the first drive signal based on the first frequency control signal and the operating parameter of the power grid includes: generating a third modulated wave signal based on the first frequency control signal and the operating parameter of the power grid; and generating the first drive signal based on the third modulated wave signal and a third carrier signal, where the third carrier signal is a sine wave signal with a fixed period or a pulse signal.

In a possible design, the generating a first frequency control signal based on a second power difference and a second voltage difference includes: generating a first frequency based on the second power difference and a fifth droop coefficient, where the fifth droop coefficient is determined based on a correspondence between the active power output by the inverter and the power grid frequency; generating a second frequency based on the second voltage difference and a sixth droop coefficient, where the sixth droop coefficient is determined based on a correspondence between the direct current output by the direct current converter and the power grid frequency; and generating the first frequency control signal based on the first frequency, the second frequency, and a third frequency, where the third frequency is an initial frequency delivered by a plant management system, and the plant management system is configured to control an operating state of the photovoltaic power generation system.

In a possible design, the method further includes: in a process of controlling the operating state of the inverter based on the first drive signal, obtaining the first voltage and the active power output by the inverter; and when it is determined that the active power, output by the inverter, obtained this time is the same as an active power, output by the inverter, obtained at an adjacent time and that the first voltage obtained this time is greater than a first voltage obtained last time, adjusting the first drive signal, to increase a frequency of an alternating current output by the inverter and increase an active power output by the photovoltaic power generation system. After the first drive signal is adjusted, the active power output by the photovoltaic power generation system is less than or equal to a fifth specified value and the power grid frequency is less than or equal to a maximum frequency during normal operation of the power grid. The fifth specified value is a maximum active power output by the photovoltaic power generation system during normal operation of the power grid.

In a possible design, the method further includes: in a process of controlling the operating state of the inverter based on the first drive signal, obtaining the first voltage and the active power output by the inverter; and when it is determined that the first voltage obtained this time is the same as a first voltage obtained at an adjacent time and that the active power, output by the inverter, obtained this time is greater than an active power, output by the inverter, obtained last time, adjusting the first drive signal, to reduce a frequency of an alternating current output by the inverter and reduce an active power output by the photovoltaic power generation system. After the first drive signal is adjusted, the active power output by the photovoltaic power generation system is greater than or equal to a sixth specified value and the power grid frequency is greater than or equal to a minimum frequency during normal operation of the power grid. The sixth specified value is a minimum active power output by the photovoltaic power generation system during normal operation of the power grid.

In a possible design, the method further includes: generating a second drive signal based on the first voltage and a third voltage difference, and controlling, based on the second drive signal, the active power output by the direct current converter, where the third voltage difference is a difference between a third reference voltage and the first voltage, and the third reference voltage is the rated voltage output by the direct current converter during normal operation of the power grid.

In a possible design, the generating a second drive signal based on the first voltage and a third voltage difference includes: determining an operating mode of the direct current converter, where the operating mode includes a unidirectional support mode and a bidirectional support mode; generating the third reference voltage based on the operating mode of the direct current converter and an operating parameter of the direct current converter, where the operating parameter of the direct current converter includes one or both of an input current and an input power; obtaining a fourth power based on the third voltage difference and a seventh droop coefficient, where the seventh droop coefficient is determined based on a correspondence between the output voltage of the direct current converter and the active power output by the direct current converter; determining a second active power control signal based on the fourth power and a maximum power MPPE; and generating the second drive signal based on the second active power control signal and an input parameter of the direct current converter.

In a possible design, the generating the second drive signal based on the second active power control signal and an input parameter of the direct current converter includes: generating a fourth modulated wave signal based on the second active power control signal and the input parameter of the direct current converter; and generating the second drive signal based on the fourth modulated wave signal and a fourth carrier signal, where the fourth carrier signal is a sine wave signal with a fixed period or a pulse signal.

In a possible design, the method further includes: determining the MPPE based on the operating parameter of the direct current converter.

In a possible design, the generating the third reference voltage based on the operating mode of the direct current converter and an operating parameter of the direct current converter includes: determining an additional reserved power based on the operating mode of the direct current converter; and generating the third reference voltage based on the operating parameter of the direct current converter and the additional reserved power.

For technical effect that can be achieved in the second aspect, refer to descriptions of beneficial effect in the first aspect. Details are not described herein again.

**BRIEF DESCRIPTION OF DRAWINGS**

FIG. 1 is a schematic diagram 1 of a structure of a photovoltaic power generation system according to an embodiment of this application;

FIG. 2 is a schematic diagram 2 of a structure of a photovoltaic power generation system according to an embodiment of this application;

FIG. 3 is a schematic diagram of a correspondence between an active power output by an inverter and a direct current voltage according to an embodiment of this application;

FIG. 4 is a schematic diagram of a correspondence between an active power output by an inverter and a power grid frequency according to an embodiment of this application;

FIG. 5 is a schematic diagram of a correspondence between a direct current voltage and a power grid frequency according to an embodiment of this application;

FIG. 6 is a schematic diagram 3 of a structure of a photovoltaic power generation system according to an embodiment of this application;

FIG. 7 is a schematic diagram 1 of a correspondence between an active power output by a direct current converter and a direct current voltage according to an embodiment of this application;

FIG. 8 is a schematic diagram 1 of an output waveform of a photovoltaic power generation system according to an embodiment of this application;

FIG. 9 is a schematic diagram 2 of an output waveform of a photovoltaic power generation system according to an embodiment of this application;

FIG. 10 is a schematic diagram 2 of a correspondence between an active power output by a direct current converter and a direct current voltage according to an embodiment of this application;

FIG. 11 is a schematic diagram 3 of an output waveform of a photovoltaic power generation system according to an embodiment of this application;

FIG. 12 is a schematic diagram 4 of an output waveform of a photovoltaic power generation system according to an embodiment of this application;

FIG. 13 is a schematic flowchart 1 of a photovoltaic power generation system control method according to an embodiment of this application;

FIG. 14 is a schematic flowchart 2 of a photovoltaic power generation system control method according to an embodiment of this application;

FIG. 15 is a schematic flowchart 3 of a photovoltaic power generation system control method according to an embodiment of this application;

FIG. 16 is a schematic flowchart 4 of a photovoltaic power generation system control method according to an embodiment of this application; and

FIG. 17 is a schematic flowchart 5 of a photovoltaic power generation system control method according to an embodiment of this application.

**DESCRIPTION OF EMBODIMENTS**

To make objectives, technical solutions, and advantages of embodiments of this application clearer, the following describes embodiments of this application in detail with reference to accompanying drawings. Terms used in implementations of this application are only used to explain specific embodiments of this application, but are not intended to limit this application. It is clear that the described embodiments are merely some rather than all of embodiments of this application. All other embodiments obtained by persons of ordinary skill in the art based on embodiments of this application without creative efforts shall fall within the protection scope of this application.

It should be noted that, the terms "first", "second", and the like in this specification, claims, and accompanying drawings of this application are intended to distinguish between similar objects but do not necessarily indicate a specific order or sequence. It should be understood that the data termed in such a way is interchangeable in appropriate circumstances, so that embodiments of this application described herein can be implemented in an order other than the orders illustrated or described herein. Implementations described in the following example embodiments do not represent all implementations consistent with this application. On the contrary, the implementations are merely examples of apparatuses and methods that are described in the appended claims in detail and that are consistent with some aspects of this application.

The following describes some terms in embodiments of this application, to facilitate understanding of persons skilled in the art.

(1) In embodiments of this application, "a plurality of" means two or more, and another quantifier is similar to this.

(2) A switching transistor in embodiments of this application may be one or more of a plurality of types of switching transistors, such as a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) transistor. Details are not listed in embodiments of this application. The switching transistors may be packaged in a single-transistor package, or may be packaged in a multi-transistor package. This is not limited in embodiments of this application. Each switching transistor may include a first end, a second end, and a control end, where the control end is configured to control conduction or cutoff of the switching transistor. When the switching transistor is conducted, a current may be transmitted between the first end and the second end of the switching transistor. When the switching transistor is cut off, the current cannot be transmitted between the first end and the second end of the switching transistor. A MOSFET is used as an example. The control end of the switching transistor is a gate, and the first end of the switching transistor may be a source, and the second end may be a drain; or the first end may be a drain, and the second end may be a source.

(3) In embodiments of this application, a "connection" may be understood as an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C. The "connection" in embodiments of this application may alternatively be understood as a wireless connection, to be specific, a connection between two electrical elements may be an electromagnetic connection between the two electrical elements.

(4) Active power-frequency droop control: The active power-frequency droop control may be constructed based on an approximate linear relationship between an active power and a power grid frequency. In the active power-frequency droop control, when the power grid frequency fluctuates because a power grid cannot meet a load requirement, an inverter may be controlled to output an active power for controlling the power grid frequency to restore to normal.

(5) Voltage-active power droop control: An approximate linear relationship between a direct current voltage at an input side of an inverter and an active power output by the inverter is established, and the voltage-active power droop control is constructed based on the approximate linear relationship. In the voltage-active power droop control, when a power grid frequency fluctuates because a power grid cannot meet a load requirement, the inverter may be controlled to output an active power for controlling the power grid frequency to restore to normal.

(6) Voltage-frequency droop control: An approximate linear relationship between a direct current voltage and a power grid frequency is established, and the voltage-frequency droop control is constructed based on the approximate linear relationship. In the direct current voltage-frequency droop control, when the power grid frequency fluctuates because a power grid cannot meet a load requirement, a direct current converter may be controlled to output an active power required for restoring the power grid frequency.

(7) Maximum power point tracking (maximum power point tracking, MPPT) mode: A controller of a direct current converter may track a maximum power point of a photovoltaic module. This can significantly increase an output power of a photovoltaic array and further improve energy utilization of a photovoltaic system.

(8) Maximum power point estimation (maximum power point estimation, MPPE) mode: A controller of a direct current converter may estimate a maximum power point of a photovoltaic module.

The solutions disclosed in this application may be applied to a new energy system, and applied to a grid-connected scenario of the new energy system. The new energy system includes but is not limited to a photovoltaic power generation system, a wind power generation system, a water power generation system, or the like.

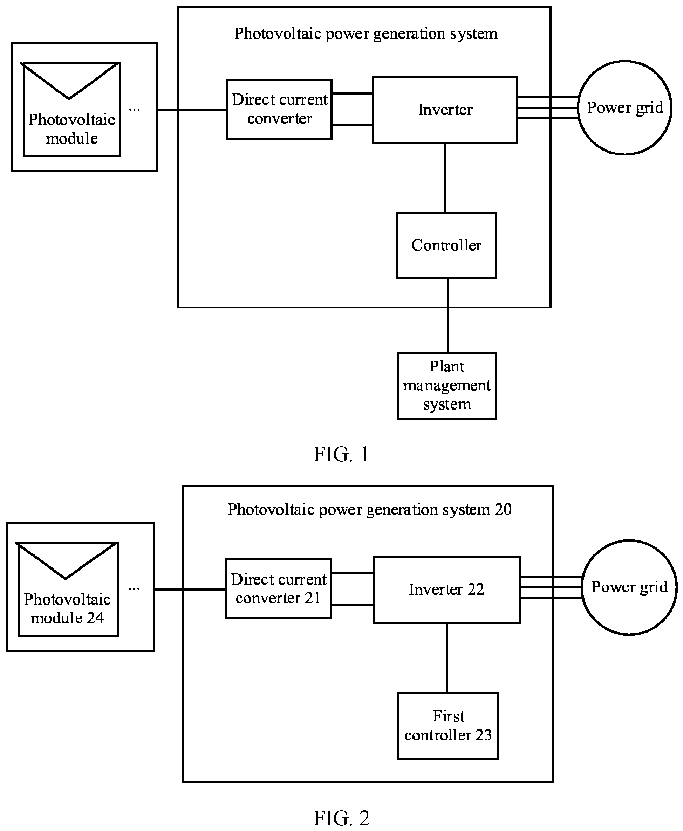

In a specific application scenario, the new energy system may be a photovoltaic power generation system. FIG. 1 is an example of a schematic diagram of a structure of a photovoltaic power generation system. Refer to FIG. 1. The photovoltaic power generation system mainly includes a direct current converter, an inverter, and a controller. The photovoltaic power generation system is connected to a photovoltaic module, and outputs electric energy output by the photovoltaic module to a power grid.

In a possible implementation, the photovoltaic power generation system includes the photovoltaic module.

In a grid connection process of the photovoltaic power generation system, the photovoltaic module may convert light energy into a direct current. The direct current converter is connected to an output end of the photovoltaic module, and may receive the direct current output by the photovoltaic module and perform voltage conversion on the received direct current. The inverter may receive a direct current that is output by the direct current converter and that is obtained through voltage conversion, convert the received direct current into an alternating current, and output the alternating current to the power grid through a grid connection point, thereby implementing grid connection of the photovoltaic power generation system. The controller is connected to the inverter, and is configured to control the inverter to convert the received direct current into an alternating current. The direct current converter is usually connected to the inverter through a direct current bus, in other words, a voltage amplitude of the direct current output by the direct current converter is a direct current bus voltage.

During actual application, the inverter includes a plurality of switch devices. The controller sends a drive signal to the plurality of switches in the inverter, to control conduction states of the plurality of switch devices in the inverter, so as to control operation of the inverter.

Still refer to FIG. 1. The controller is connected to an upper-layer plant management system of the photovoltaic power generation system, and adjusts an operating state of the inverter when receiving a control instruction sent by the plant management system. Specifically, the plant management system may obtain an operating parameter of the power grid periodically or in real time, and monitor an operating state of the power grid. When a fault of the power grid or a great change of a connected load causes a frequency change of the power grid, the plant management system may calculate, based on an operating status of the power grid, an active power required for frequency support, and deliver a scheduling instruction to the controller. After receiving the scheduling instruction, the controller adjusts a drive signal of a switching transistor in the inverter, to adjust an active power output by the inverter, so as to implement a frequency support function for the power grid.

During actual application, the frequency support function of the controller is implemented based on the scheduling instruction delivered by the upper-layer plant management system. The controller is controlled by the plant management system. When the power grid frequency fluctuates, a response speed is slow.

In view of this, embodiments of this application provide a photovoltaic power generation system and a photovoltaic power generation system control method, to quickly implement frequency support. To make objectives, technical solutions, and advantages of this application clearer, the following further describes this application in detail with reference to accompanying drawings.

FIG. 2 is a schematic diagram of a structure of a photovoltaic power generation system according to an embodiment of this application. Refer to FIG. 2. The photovoltaic power generation system 20 includes a direct current converter 21, an inverter 22, and a first controller 23. An input end of the direct current converter 21 is connected to an output end of a photovoltaic module 24, an output end of the direct current converter 21 is connected to the inverter 22, and the inverter 22 is connected to the first controller 23.

In an example, the photovoltaic power generation system 20 may further include the photovoltaic module 24.

Refer to FIG. 2. In a grid connection process of the photovoltaic power generation system 20, the photovoltaic module 24 may convert light energy into a direct current, and output the direct current to the direct current converter 21. The direct current converter 21 may perform voltage conversion on the direct current output by the photovoltaic module 24, and output a direct current obtained through voltage conversion. The inverter 22 may convert the direct current output by the direct current converter 21 into an alternating current and output the alternating current to a power grid, thereby implementing grid connection of the photovoltaic power generation system. The first controller 23 is connected to the inverter 22, and may control the inverter 22 to convert a received direct current into an alternating current. The direct current converter 21 is connected to the inverter 22 through a direct current bus.

During actual application, the direct current converter 21 is connected to the inverter 22 through the direct current bus, and a voltage of an alternating current output by the direct current converter 21 is a direct current bus voltage.

Specifically, the first controller 23 may generate a first drive signal based on two of a first voltage of the direct current output by the direct current converter 21, an active power output by the inverter 22, and an operating parameter of the power grid, and control an operating state of the inverter 22 based on the first drive signal, so that the alternating current output by the inverter 22 can implement a frequency support function.

Refer to FIG. 2. In the grid connection process of the photovoltaic power generation system 20, when a power grid frequency changes, an amplitude of the first voltage changes, and the active power output by the inverter 22 also causes a change of the power grid frequency, that is, the foregoing three parameters affect each other. Therefore, when detecting that the power grid deviates from a rated frequency during normal operation of the power grid, the first controller may generate an adjustment value of the other parameter based on any two of the foregoing three parameters, and generate a corresponding drive signal, so that the inverter 22 outputs the alternating current for implementing frequency support, to implement the frequency support function of the photovoltaic power generation system.

The operating parameter of the power grid may include one or more of the following: a reactive current, an active current, an active power, a reactive power, a voltage amplitude, and a power grid frequency.

It should be understood that, in the photovoltaic power generation system 20 provided in this embodiment of this application, the local first controller 23 of the photovoltaic power generation system 20 may perform frequency support calculation. Compared with an upper-layer plant management system, in which frequency support calculation is performed, in the conventional technology, the photovoltaic power generation system reduces a time for obtaining the power grid frequency and a related parameter and a time for delivering a scheduling instruction, thereby implementing fast frequency support, and quickly restoring the power grid to a stable state.

In addition, in the photovoltaic power generation system 20 provided in this embodiment of this application, the first voltage that represents an electric energy generation status of the photovoltaic power generation system 20 participates in frequency support calculation. Because the electric energy generation status of the photovoltaic power generation system 20 is considered, an active power output by the photovoltaic power generation system 20 may be appropriately increased without affecting operation of the power grid, to increase a proportion of new energy in the power grid.

During actual application, the inverter 22 may include devices such as a switching transistor, a diode, an inductor, and a capacitor. The operating state of the inverter 22 may be implemented by adjusting operating states of these devices (for example, switching transistors).

Specifically, if the switching transistor in the inverter 22 is a MOS transistor, the first controller 23 may be connected to a gate of the MOS transistor, to adjust an operating status of the inverter 22 by controlling on/off of the MOS transistor; or if the switching transistor in the inverter 22 is a BJT, the first controller 23 may be connected to a base of the BJT, to adjust the operating status of the inverter 22 by controlling on/off of the BJT.

The following describes, with reference to embodiments, processes in which the first controller 23 implements frequency support based on different parameters.

**Embodiment 1**

During actual application, the first controller 23 generates a first drive signal based on a first voltage output by the direct current converter 21 and a power grid frequency.

Specifically, the first controller 23 may calculate a first voltage difference between the first voltage and a first reference voltage, and calculate a first frequency difference between the power grid frequency and a first reference frequency; generate a first active power control signal based on the first voltage difference and the first frequency difference; and generate the first drive signal based on the first active power control signal and a current operating parameter of a power grid. The first reference voltage is a rated voltage output by the direct current converter 21 during normal operation of the power grid. The first reference frequency is a rated frequency during normal operation of the power grid.

During actual application, when the power grid frequency is higher than the first reference frequency, it indicates that an active power currently transmitted on the power grid is higher than an active power actually required by the power grid. When the power grid frequency is lower than the first reference frequency, it indicates that an active power currently transmitted on the power grid is lower than an active power actually required by the power grid; and an active power-frequency droop control policy is established based on a correspondence between the power grid frequency and an active power output by an inverter. Similarly, when the first voltage output by the direct current converter 21 is higher than the first reference voltage, it indicates that a power output by the direct current converter 21 exceeds a rated power during normal operation of the power grid; when the inverter sends the power to the power grid, the power transmitted on the power grid exceeds the power actually required by the power grid. When the first voltage output by the direct current converter 21 is lower than the first reference power, it indicates that the power output by the direct current converter 21 exceeds the rated power during normal operation of the power grid; and when the inverter sends the power to the power grid, the power transmitted on the power grid is less than the power actually required by the power grid, and a voltage-active power droop control policy is established based on a correspondence between the active power output by the inverter and a direct current bus voltage. An active power required for frequency support is obtained through calculation according to the foregoing two droop control policies.

During actual application, the first controller 23 forms the voltage-active power droop control policy based on the first voltage difference and a first droop coefficient, to obtain a first power; and the first controller 23 obtains a second power based on the first frequency difference and a second droop coefficient, where the second droop coefficient is determined based on the correspondence between the power grid frequency and the active power output by the inverter. The first active power control signal required for frequency support is generated based on the first power and the second power that are obtained according to the foregoing two droop control policies, and a third power. The first droop coefficient is determined based on a correspondence between a direct current output by the direct current converter and the active power output by the inverter. Similarly, the third power is an initial active power delivered by a plant management system, and the plant management system is configured to control an operating state of the photovoltaic power generation system 20.

In an example, the first controller 23 may be separately connected to a direct current sensor and an alternating current sensor. The direct current sensor is configured to detect the first voltage output by the direct current converter 21, and the alternating current sensor may detect the operating parameter of the power grid. An alternating current detection unit may be, but is not limited to, a voltage sensor and a current sensor, for example, a Hall effect sensor.

During actual application, after obtaining values detected by the sensors, the first controller 23 may calculate, according to the following formula, the first active power control signal $P_{INV}$ for power support:

$$P_{INV} = K_{up} * \left(U_{bus} - U_{InvBus}^{ref}\right) + K_{pf} * \left(f_{req}^{ref} - f_{req}\right) + P_{cmd} \quad \text{(Formula 1)}$$

$K_{up}$ indicates the first droop coefficient, $K_{pf}$ indicates the second droop coefficient, $U_{bus}$ indicates the first voltage, $U_{InvBus}^{ref}$ indicates the first reference voltage, $f_{req}$ indicates the power grid frequency, $f_{req}^{ref}$ indicates the first reference frequency, and $P_{cmd}$ indicates the initial active power delivered by the upper-layer plant management system. The first droop coefficient $K_{up}$ and the second droop coefficient $K_{pf}$ may be, but are not limited to, constants, exponents, and power exponents.

During specific implementation, the first droop coefficient is set based on a curve of the correspondence between the direct current bus voltage and the active power output by the inverter 22, and the second droop coefficient is set based on a curve of the correspondence between the active power output by the inverter and the power grid frequency. The foregoing values may be configured by using a proportional controller, an integrator, another combination, or a user selection.

Refer to FIG. 2. The first controller 23 generates the first active power control signal according to the foregoing formula 1, and generates a first modulated wave signal based on the first active power control signal and the current operating parameter of the power grid. After the first modulated wave signal is compared with a first carrier signal, the first drive signal is generated, and is sent to switching transistors in the inverter 22. The switching transistors in the inverter 22 adjust a conduction time sequence of the switching transistors under control of the first drive signal, to adjust the active power output by the inverter 22, so as to implement a frequency support function. The first carrier signal may be a sine wave signal with a fixed period or a pulse signal.

It can be learned from the foregoing formula 1 that the active power output by the inverter 22 may be dynamically adjusted based on a dynamic change of the direct current bus voltage and a dynamic change of the power grid frequency.

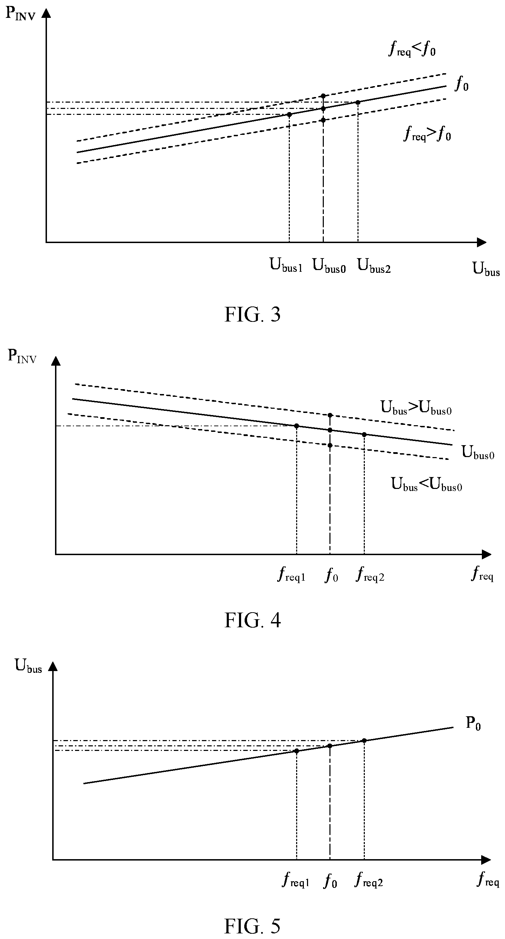

Specifically, the first controller 23 adjusts, according to both the voltage-active power droop control policy and the active power-frequency droop control policy, the active power output by the inverter 22. It can be learned from the foregoing formula 1 that, when the power grid frequency remains unchanged, because the direct current converter 21 operates in an MPPT mode, as the direct current bus voltage gradually increases within a range of [Ubusmin, Ubusmax], it indicates that when an electric energy yield of the photovoltaic power generation system 20 gradually increases, the active power output by the inverter 22 may be controlled without affecting operation of the power grid, to increase monotonically. For the correspondence between the active power output by the inverter 22 and the direct current voltage, refer to FIG. 3. The range of the direct current bus voltage is an operating range of the direct current bus during normal operation of the direct current converter 21, and is determined based on an operating voltage of the direct current converter 21 and an alternating current voltage amplitude at an output side of the inverter.

During actual application, the first controller may periodically obtain the power grid frequency and the first voltage in a process of controlling an operating state of the inverter based on the first drive signal; and when it is determined that the power grid frequency obtained this time is the same as a power grid frequency obtained at an adjacent time and that the first voltage obtained this time is greater than a first voltage obtained last time, adjust the first drive signal, to increase an active power output by the photovoltaic power generation system. The active power output by the photovoltaic power generation system is less than or equal to a first specified value after the first drive signal is adjusted, and the first specified value is a maximum active power output by the photovoltaic power generation system during normal operation of the power grid. The first specified value may be configured based on an electric energy device connected to the power grid.

In an example, when the active power output by the inverter 22 increases, the power grid frequency increases, and another device on the power grid may reduce an amount of electric energy transmitted to the power grid, to implement coordinated control with the another device on the power grid.

Specifically, the first controller 23 adjusts, according to both the voltage-active power droop control policy and the active power-frequency droop control policy, the active power output by the inverter 22. It can be learned from the formula 1 that, when the direct current bus voltage remains unchanged, as the power grid frequency gradually increases within a range of [freqmin, freqmax], it indicates that when an active power currently transmitted on the power grid gradually increases and exceeds the active power actually required by the power grid, the active power output by the inverter 22 may be controlled to decrease monotonically. For the correspondence between the active power output by the inverter 22 and the power grid frequency, refer to FIG. 4. The range of the power grid frequency is a fluctuation range during normal operation of the power grid.

During actual application, the first controller may periodically obtain the power grid frequency and the first voltage in a process of controlling an operating state of the inverter based on the first drive signal; and adjust the first drive signal when it is determined that the first voltage obtained this time is the same as a first voltage obtained at an adjacent time and that the power grid frequency obtained this time is greater than a power grid frequency obtained last time, to reduce an active power output by the photovoltaic power generation system. The active power output by the photovoltaic power generation system is greater than or equal to a second specified value after the first drive signal is adjusted, and the second specified value is a minimum active power output by the photovoltaic power generation system during normal operation of the power grid.

It can be learned from FIG. 3, FIG. 4, and content of the formula 1 that, when the active power output by the inverter 22 is fixed, for a correspondence between the direct current bus voltage and the power grid frequency, refer to FIG. 5.

**Embodiment 2**

During actual application, the first controller 23 generates a first drive signal based on an active power output by the inverter 22 and a power grid frequency.

Specifically, the first controller 23 may generate a first voltage control signal based on a first power difference and a second frequency difference, and generate the first drive signal based on the first voltage control signal and an operating parameter of a power grid. The first power difference is a difference between the active power output by the inverter 22 and a first reference power, the second frequency difference is a difference between the power grid frequency and a second reference frequency, the first reference power is a rated active power output by the inverter 22 during normal operation of the power grid, and the first reference frequency is a rated frequency during normal operation of the power grid.

During actual application, when the power grid frequency is higher than the second reference frequency, it indicates that an active power currently transmitted on the power grid is higher than an active power actually required by the power grid. When the power grid frequency is lower than the second reference frequency, it indicates that an active power currently transmitted on the power grid is lower than an active power actually required by the power grid, and an active power-frequency droop control policy is established based on a correspondence between the power grid frequency and the active power. Similarly, when the power grid frequency is higher than the second reference frequency, a direct current bus voltage increases; or when the power grid frequency is lower than a first reference frequency, a direct current bus voltage decreases. A voltage-frequency droop control policy is established based on a correspondence between the power grid frequency and the direct current bus voltage. A first voltage for frequency support is calculated according to the foregoing two droop control policies.

Specifically, the first controller 23 obtains a first direct current voltage based on the first power difference and a third droop coefficient, where the third droop coefficient is determined based on a correspondence between an active power output by the direct current converter 21 and a direct current output by the direct current converter 21; obtains a second direct current voltage based on the second frequency difference and a fourth droop coefficient, where the fourth droop coefficient is determined based on a correspondence between the power grid frequency and the direct current output by the direct current converter; and generates the first voltage control signal based on the first direct current voltage, the second direct current voltage, and a third direct current voltage. The third direct current voltage is an initial direct current voltage delivered by a plant management system, and the plant management system is configured to control an operating state of a photovoltaic power generation system.

It should be understood that the inverter 22 may operate in an MPPT mode. The inverter 22 may control an output power of the direct current converter by adjusting the output voltage of the direct current converter. When an input voltage of the inverter 22 changes, a voltage output by the inverter to the power grid also changes, to implement frequency support.

In an example, the first controller 23 may be separately connected to a first sensor and a second sensor. The first sensor is configured to detect the operating parameter of the power grid, and the second sensor is configured to detect the active power output by the inverter 22. The first sensor and the second sensor each are an alternating current sensor, for example, a Hall effect sensor.

Specifically, the first controller 23 dynamically adjusts a direct current voltage at an inverter side based on a dynamic change of the power grid frequency and a dynamic change of the active power output by the inverter 22. Specifically, the first controller 23 calculates, according to the following formula, the first voltage control signal for frequency support:

$$U_{InvBus}^{ref} = D_{up} * (P_{INVRef} - P_{INV}) + D_{uf} * (f_{req} - f_{req}^{ref}) + U_{InvBus0}^{ref} \quad (Formula\ 2)$$

$U_{InvBus}^{ref}$ indicates the generated first voltage control signal, $U_{InvBus0}^{ref}$ indicates the initial direct current voltage delivered by the plant management system, Dup indicates the third droop coefficient, Duf indicates the fourth droop coefficient, $P_{INVRef}$ indicates a power instruction value, $P_{INV}$ indicates the active power output by the inverter, $f_{req}$ indicates the power grid frequency, and $f_{req}^{ref}$ indicates a reference frequency.

The third droop coefficient is determined based on the correspondence between the active power output by the direct current converter 21 and the direct current output by the direct current converter, and the fourth droop coefficient is determined based on the correspondence between the power grid frequency and the direct current output by the direct current converter 21.

Specifically, the third droop coefficient is set based on a curve of a correspondence between the direct current bus voltage and the active power output by the inverter 22, and the fourth droop coefficient is set based on a curve of a correspondence between the first voltage output by the direct current converter 21 and the power grid frequency. The foregoing values may be configured by using a proportional controller, an integrator, another combination, or a user selection.

Refer to FIG. 2. The first controller 23 generates, according to the foregoing formula 2, the first voltage control signal for implementing frequency support, and generates a second modulated wave signal based on the first voltage control signal and a current operating parameter of the power grid. After the second modulated wave signal is compared with a second carrier signal, the first drive signal is generated, and is sent to switching transistors in the inverter 22. The switching transistors in the inverter 22 adjust a conduction time sequence of the switching transistors under control of the second drive signal, to adjust the active power output by the inverter 22, so as to implement a frequency support function. The second carrier signal may be a sine wave signal with a fixed period or a pulse signal.

It can be learned from the foregoing formula 2 that a direct current voltage output by the direct current converter 21 may be dynamically adjusted based on a dynamic change of the power grid frequency and a dynamic change of the active power output by the inverter.

Specifically, the first controller 23 adjusts, according to both the voltage-active power droop control policy and the voltage-frequency droop control policy, the direct current voltage received by the inverter 22. It can be learned from the formula 2 that, when the active power output by the inverter 22 remains unchanged, as the power grid frequency gradually increases within a range of [freqmin, freqmax], it indicates that the active power currently transmitted on the power grid gradually increases and exceeds the active power actually required by the power grid. A first voltage amplitude output by the direct current converter 21 may be increased, to reduce the active power output by the inverter 22, so as to ensure normal operation of the power grid.

During actual application, the first controller may periodically obtain, based on the first drive signal in a process of controlling an operating state of the inverter, the power grid frequency and the active power output by the inverter; and when it is determined that the active power, output by the inverter, obtained this time is the same as an active power, output by the inverter, obtained at an adjacent time and that the power grid frequency obtained this time is greater than a power grid frequency obtained last time, adjust the first drive signal, to increase the first voltage output by the direct current converter and reduce the active power output by the photovoltaic power generation system. The active power output by the photovoltaic power generation system is greater than or equal to a third specified value after the first drive signal is adjusted, and the third specified value is a minimum active power output by the photovoltaic power generation system during normal operation of the power grid.

It can be further learned from the formula 2 that, when the power grid frequency remains unchanged, as the active power output by the inverter 22 gradually increases, it indicates that when an electric energy yield of the photovoltaic power generation system 20 gradually increases, the first voltage amplitude output by the direct current converter may be increased without affecting operation of the power grid, to control the active power output by the inverter 22 to decrease monotonically.

During actual application, the first controller may periodically obtain, in a process of controlling an operating state of the inverter based on the first drive signal, the power grid frequency and the active power output by the inverter; and when it is determined that the power grid frequency obtained this time is the same as a power grid frequency obtained at an adjacent time and that the active power, output by the inverter, obtained this time is greater than an active power, output by the inverter, obtained last time, adjust the first drive signal, to increase the first voltage output by the direct current converter and reduce an active power output by the photovoltaic power generation system. The active power output by the photovoltaic power generation system is greater than or equal to a fourth specified value after the first drive signal is adjusted, and the fourth specified value is a minimum active power output by the photovoltaic power generation system during normal operation of the power grid.

**Embodiment 3**

During actual application, the first controller 23 may generate a first drive signal based on a first voltage of a direct current output by the direct current converter 21 and an active power output by the inverter 22.

Specifically, the first controller 23 generates a first frequency control signal based on a second power difference and a second voltage difference, and generates the first drive signal based on the first frequency control signal and an operating parameter of a power grid. The second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid.

During actual application, when the active power output by the inverter 22 is higher than the second reference power, it indicates that the active power output by the inverter 22 is higher than an active power actually required by the power grid, resulting in an increase of a power grid frequency. When the active power output by the inverter 22 is lower than the second reference power, it indicates that the active power output by the inverter 22 is lower than an active power actually required by the power grid, resulting in a decrease of a power grid frequency. An active power-frequency droop control policy is established based on a correspondence between the active power output by the inverter 22 and the power grid frequency. Similarly, when the first voltage output by the direct current converter 21 is higher than the second reference voltage, it indicates that a power transmitted on the power grid exceeds the power actually required by the power grid and the power grid frequency increases. When the first voltage output by the direct current converter 21 is lower than the second reference voltage, it indicates that a power transmitted on the power grid is lower than the power actually required by the power grid and the power grid frequency decreases. A voltage-frequency droop control policy is established based on a correspondence between the first voltage output by the direct current converter 21 and the power grid frequency, and a frequency for frequency support is calculated according to the foregoing two droop control policies.

Specifically, the first controller 23 obtains a first direct current voltage based on a first power difference and a third droop coefficient, where the third droop coefficient is determined based on a correspondence between an active power output by the direct current converter and the direct current output by the direct current converter; obtains a second direct current voltage based on a second frequency difference and a fourth droop coefficient, where the fourth droop coefficient is determined based on a correspondence between the power grid frequency and the direct current output by the direct current converter; and generates a first voltage control signal based on the first direct current voltage, the second direct current voltage, and a third direct current voltage. The third direct current voltage is an initial direct current voltage delivered by a plant management system, and the plant management system is configured to control an operating state of a photovoltaic power generation system.

Specifically, the first controller 23 may be separately connected to a direct current sensor and an alternating current sensor. The direct current sensor is configured to detect the first voltage output by the direct current converter 21, and the alternating current sensor is configured to detect the active power output by the inverter 22.

During actual application, the first controller 23 dynamically adjusts, based on a dynamic change of the active power output by the inverter 22 and a dynamic change of the first voltage output by the direct current converter 21, a frequency of an alternating current output by the inverter 22. Specifically, the first controller 23 calculates, according to the following formula, the first frequency control signal for frequency support:

$$f_{req}^{ref} = R_{fp} * (P_{INVRef} - P_{INV}) + R_{fu} * (U_{bus} - U_{InvBus}^{ref}) + f_{req0}^{ref} \quad (\text{Formula } 3)$$

$f_{req}^{ref}$ indicates the generated first frequency control signal, $f_{req0}^{ref}$ indicates an initial frequency delivered by the plant management system, Rfp indicates a fifth droop coefficient, Rfu indicates a sixth droop coefficient, $P_{INVRef}$ indicates the second reference power, $P_{INV}$ indicates the active power output by the inverter, $U_{bus}$ indicates the first voltage, and $U_{InvBus}^{ref}$ indicates a second reference direct current voltage.

Specifically, the fifth droop coefficient is determined based on the correspondence between the active power output by the inverter and the power grid frequency, and the sixth droop coefficient is determined based on the correspondence between the direct current output by the direct current converter and the power grid frequency. The foregoing values may be configured by using a proportional controller, an integrator, another combination, or a user selection.

Refer to FIG. 2. The first controller 23 generates, according to the foregoing formula 3, the first frequency control signal for implementing frequency support, and generates a third modulated wave signal based on the first frequency control signal and a current operating parameter of the power grid. After the third modulated wave signal is compared with a third carrier signal, the first drive signal is generated, and is sent to switching transistors in the inverter 22. The switching transistors in the inverter 22 adjust a conduction time sequence of the switching transistors under control of the second drive signal, to adjust the active power output by the inverter 22, so as to implement a frequency support function. The third carrier signal may be a sine wave signal with a fixed period or a pulse signal.

It can be learned from the foregoing formula 3 that the frequency of the alternating current output by the inverter may be dynamically changed based on a dynamic change of the first voltage output by the direct current converter and a dynamic change of the active power output by the inverter.

Specifically, the first controller 23 adjusts, according to both the active power-frequency droop control policy and the voltage-frequency droop control policy, a direct current voltage received by the inverter 22. It can be learned from the formula 3 that, when the active power output by the inverter 22 remains unchanged, because the direct current converter 21 operates in an MPPT mode, and as a direct current bus voltage gradually increases within a range of [Ubusmin, Ubusmax], it indicates that when an electric energy yield of the photovoltaic power generation system 20 gradually increases, the active power output by the inverter 22 may be controlled without affecting operation of the power grid, to increase monotonically, the frequency of the alternating current output by the inverter increases, and the corresponding power grid frequency also increases.

During actual application, the first controller may periodically obtain, in a process of controlling an operating state of the inverter based on the first drive signal, the first voltage and the active power output by the inverter; and when it is determined that the active power, output by the inverter, obtained this time is the same as an active power, output by the inverter, obtained at an adjacent time and that the first voltage obtained this time is greater than a first voltage obtained last time, adjust the first drive signal, to increase the frequency of the alternating current output by the inverter and increase an active power output by the photovoltaic power generation system. After the first drive signal is adjusted, the active power output by the photovoltaic power generation system is less than or equal to a fifth specified value and the power grid frequency is less than or equal to a maximum frequency during normal operation of the power grid. The fifth specified value is a maximum active power output by the photovoltaic power generation system during normal operation of the power grid.

It can be further learned from the formula 3 that, when the first voltage output by the direct current converter remains unchanged, as the active power output by the inverter gradually increases, it indicates that when an active power currently transmitted on the power grid exceeds the active power actually required by the power grid, the power grid frequency increases. The active power output by the inverter 22 may be controlled to decrease monotonically, and the frequency of the alternating current output by the inverter 22 may be reduced, to reduce the power grid frequency, so as to ensure normal operation of the power grid.

During actual application, the first controller may periodically obtain the first voltage and the active power output by the inverter in a process of controlling an operating state of the inverter based on the first drive signal; and when it is determined that the first voltage obtained this time is the same as a first voltage obtained at an adjacent time and that the active power, output by the inverter, obtained this time is greater than an active power, output by the inverter, obtained last time, adjust the first drive signal, to reduce the frequency of the alternating current output by the inverter and reduce the active power output by the photovoltaic power generation system. After the first drive signal is adjusted, the active power output by the photovoltaic power generation system is greater than or equal to a sixth specified value and the power grid frequency is greater than or equal to a minimum frequency during normal operation of the power grid. The sixth specified value is a minimum active power output by the photovoltaic power generation system during normal operation of the power grid.

It should be understood that descriptions of the foregoing three embodiments are merely intended to respectively describe three manners in which the first controller controls operation of the photovoltaic power generation system. In the foregoing three embodiments, the first specified value and the fifth specified value may be a same value, and the second specified value, the third specified value, the fourth specified value, and the sixth specified value may be a same value.

During actual application, the active power output by the inverter may be separately controlled according to the foregoing formula 1, or the direct current voltage and the frequency may be controlled according to the foregoing formula 2 and the foregoing formula 3, to implement composite control.

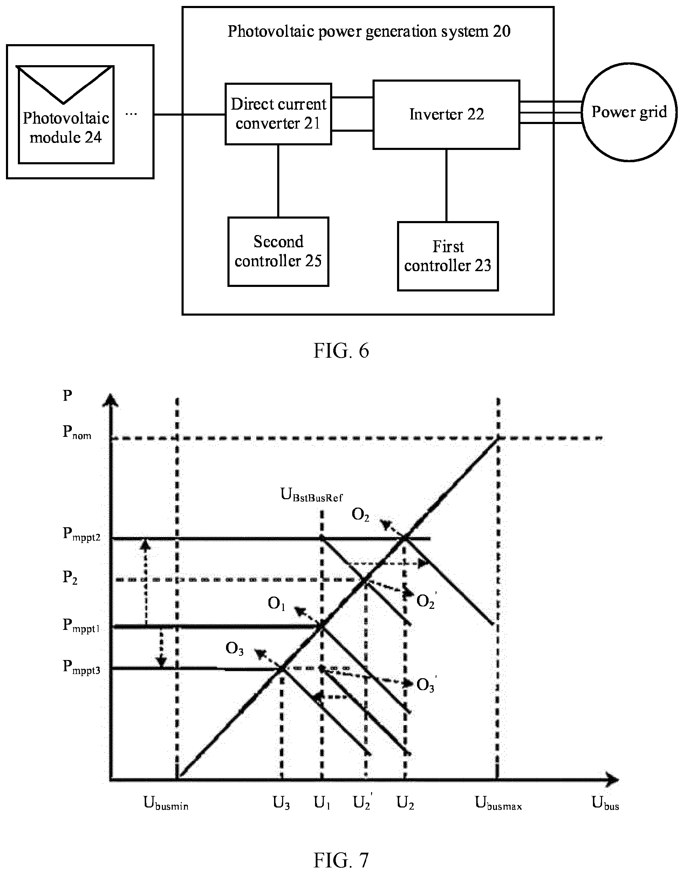

Refer to FIG. 2 and FIG. 3. The inverter 22 is connected to the direct current converter 21, and the active power output by the inverter 22 is mainly obtained from the direct current converter 21. To enable the inverter 22 to quickly output the active power required for frequency support, the photovoltaic power generation system 20 provided in embodiments of this application may further include a second controller. Refer to FIG. 6. The second controller 25 may be connected to the direct current converter 21, and may generate a second drive signal based on a third voltage difference between a third reference voltage and the first voltage, and control, based on the second drive signal, the active power output by the direct current converter 21. The third reference voltage is a rated voltage output by the direct current converter 21 during normal operation of the power grid.

As described above, when the power grid frequency increases, the direct current bus voltage increases, and when the power grid frequency decreases, the direct current bus voltage decreases. Based on the foregoing relationship between the frequency and the direct current bus voltage, the second controller 25 may determine a current power grid frequency by detecting the direct current bus voltage, to output the active power for frequency support to the inverter 22.

It should be understood that the second controller 25 may directly adjust, based on the correspondence between the power grid frequency and the direct current bus voltage, the active power by detecting a current direct current bus voltage, so that a frequency at a power grid side does not need to be obtained through a high-speed transmission line, and a problem that frequency support of the direct current converter 21 is limited by frequency sampling performance and high-speed communication performance can be resolved. In addition, the direct current converter 21 may control the direct current bus voltage, to indicate an electric energy generation status of the photovoltaic power generation system by using the inverter, so that the inverter can control, based on the electric energy generation status, an active power output to the power grid, and notify, through a change of the power grid frequency, another device connected to the power grid.

During specific implementation, the second controller is specifically configured to: determine an operating mode of the direct current converter, where the operating mode includes a unidirectional support mode and a bidirectional support mode; generate the third reference voltage based on the operating mode of the direct current converter and an operating parameter of the direct current converter, where the operating parameter of the direct current converter includes one or more of an input current, an input voltage, and an input power; obtain a fourth power based on the third voltage difference and a seventh droop coefficient, where the seventh droop coefficient is determined based on a correspondence between the output voltage of the direct current converter and the active power output by the direct current converter; determine a second active power control signal based on the fourth power and a maximum power MPPE; and generate the second drive signal based on the second active power control signal and an input parameter of the direct current converter.

In an example, the second controller may further include a direct current detection unit, configured to detect the direct current bus voltage to obtain the first voltage, and output the first voltage to a second droop calculation unit.

In another example, the second controller 25 is connected to the direct current sensor, a signal input end of the direct current sensor is connected to an output end of the direct current converter, a signal output end of the direct current sensor is connected to the second controller 25, and the second controller 25 obtains the first voltage by using the direct current sensor.

After receiving the first voltage and a reference voltage generated by a mode selection unit, the second droop calculation unit calculates, according to the following formula, the second active power control signal for implementing frequency support:

$$P_{BST} = P_{MPPE} + D_{PV} * \left( U_{BstBus}^{ref} - U_{bus} \right) \quad \text{(Formula 4)}$$

$P_{BST}$ indicates the generated second active power control signal, $P_{MPPE}$ indicates the estimated maximum power, and $D_{PV}$ indicates the seventh droop coefficient. The seventh droop coefficient $D_{PV}$ may be, but is not limited to, a constant, an exponent, and a power exponent.

It can be learned from the formula 4 that, when an illumination status of the photovoltaic module 24 is fixed, the maximum power is fixed, and the active power output by the direct current converter 21 is determined based on the reference voltage.

Specifically, the second controller 25 may determine the third reference voltage $U_{bstbus}^{ref}$ according to the following formula:

$$U_{BstBus}^{ref} = U_{BstBusRef} + dU(P, U_{bus}, \Delta P) \quad \text{(Formula 5)}$$

$U_{BstBusRef}$ indicates a specified value, $dU(P, U_{bus}, \triangle P)$ indicates a dynamic voltage adjustment value, P indicates the maximum power output by the inverter, and $\triangle P$ indicates a specified additional reserved power. The dynamic voltage adjustment value may be obtained by using a proportional controller, an integrator, or another combination.

It should be understood that, when the illumination status of the photovoltaic module 24 changes, photoelectric conversion efficiency of the photovoltaic module 24 changes. To achieve a maximum electric energy yield of the photovoltaic power generation system, the direct current converter 24 connected to the photovoltaic module 24 dynamically adjusts a voltage of the direct current converter, to operate in the MPPT mode.

During actual application, when the direct current converter 21 operates in the unidirectional support mode, $\triangle P$ is zero. When the direct current converter 21 operates in the bidirectional support mode, $\triangle P$ is less than the maximum power and greater than zero, for example, $\triangle P$ may be 10% of the maximum power, and then another value may be selected, for example, 15% of the maximum power. $\triangle P$ is set, to control the direct current converter to operate at a reduced power, so as to implement bidirectional support for the power grid frequency.

It can be learned from the formula 5 that, when the mode selection unit determines that the direct current converter operates in the unidirectional support mode, the bus reference voltage of the direct current converter is mainly determined based on a dynamic voltage point, in other words, the direct current converter 21 has a unidirectional support capability of quickly reducing the power, but does not have a support capability of quickly increasing the power. However, the direct current converter can operate in the MPPT mode during normal operation of the power grid, to ensure the electric energy yield of the photovoltaic power generation system.

Refer to FIG. 7. The direct current converter 21 outputs a maximum power Pmppt1 at an operation point O1, and has a fast unidirectional power support capability. When illumination on the photovoltaic module 24 is increased, an output power of an MPPT unit is increased. According to the formula 4 and the formula 5, the MPPT unit moves the dynamic point of the direct current converter 21 to a maximum power point O2, in other words, a mode selection module updates a reference value $U_{BstBus}^{ref}$ of a direct current voltage droop to a point U2, so that the direct current converter operates in the MPPT mode, and has a fast unidirectional power support capability. When illumination on the photovoltaic module 24 is reduced, an operating voltage of the direct current converter is reduced to a maximum power point O3 through calculation according to the formula 2 and the formula 3, so that the direct current converter operates in the MPPT mode, and has a fast unidirectional power support capability.

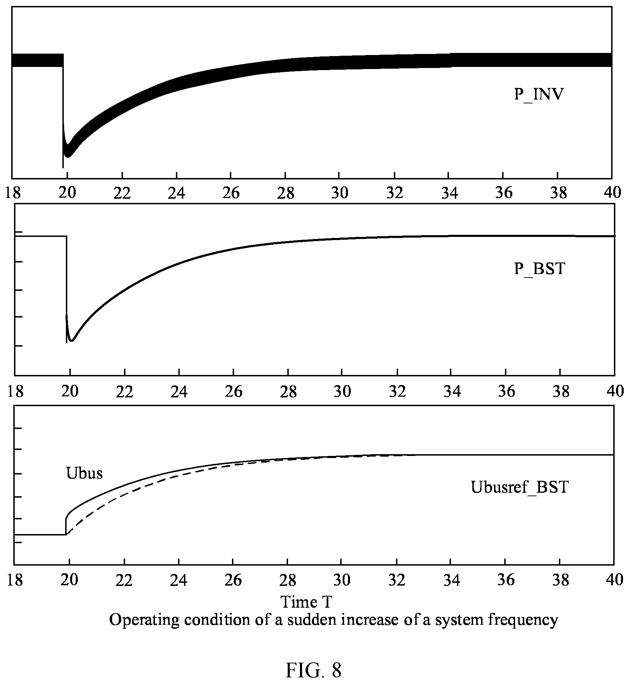

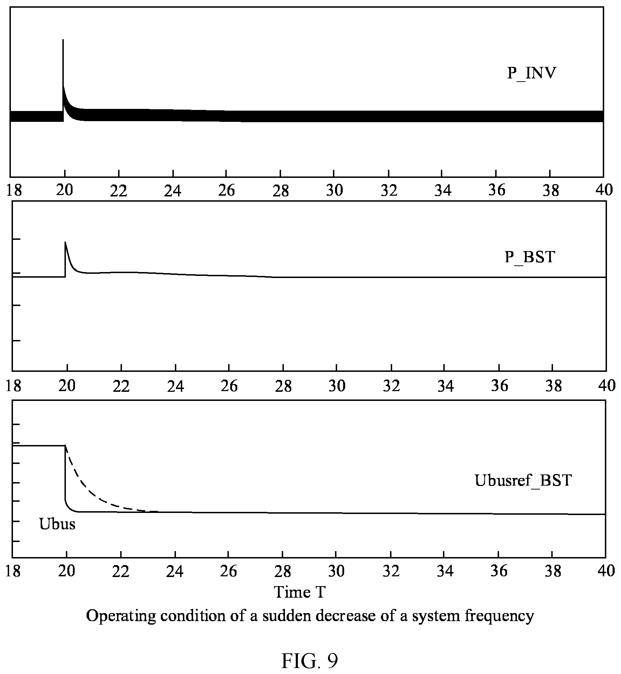

Refer to content of the formula 1 to the formula 5. If the direct current converter operates in the unidirectional support mode, when the system detects that the power grid frequency increases and the power grid frequency decreases, fluctuation of the active power output by the direct current converter and fluctuation of the active power output by the inverter may be shown in FIG. 8 and FIG. 9.

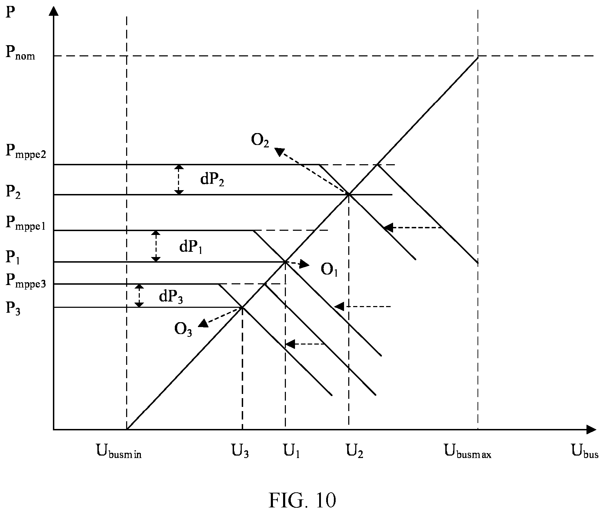

It can be learned from the formula 5 that, when the mode selection unit determines that the direct current converter operates in the bidirectional support mode, not only the bus reference voltage of the direct current converter is determined based on the dynamic point, but also the additional reserved power is reduced based on $\triangle$ P, to reduce the reference voltage of the direct current bus, so that the direct current converter operates in a power reservation mode, in other words, during normal operation, the direct current converter reduces the power for outputting. Therefore, when the power grid frequency decreases or increases, the output power of the inverter can be quickly increased or reduced, to implement a bidirectional support capability. For a correspondence between the active power output by the direct current converter and the direct current bus voltage, refer to FIG. 10.

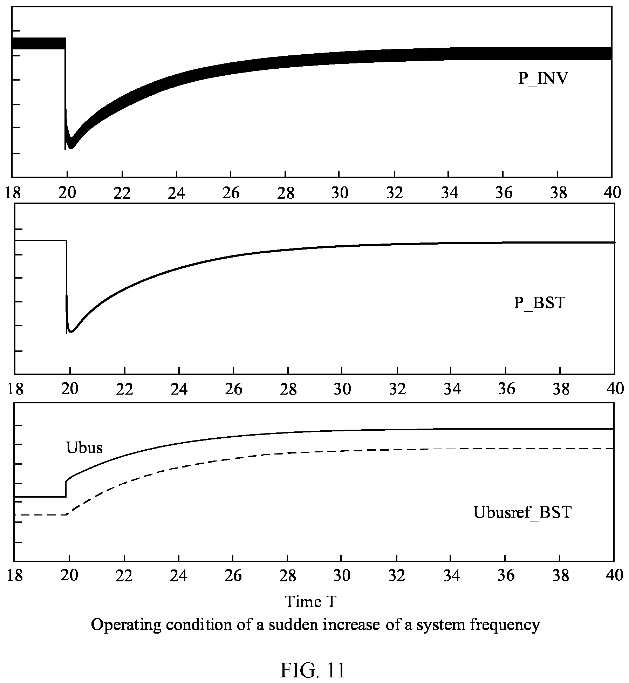

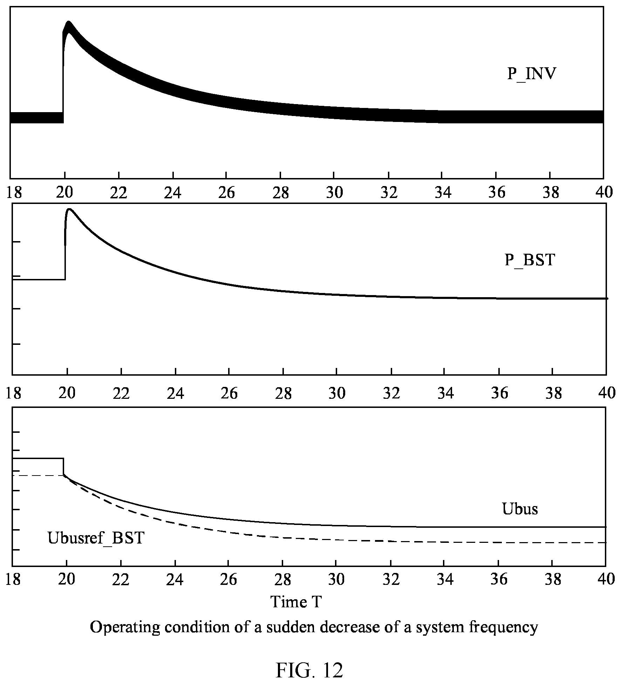

Refer to the content of the formula 1 to the formula 5. If the direct current converter operates in the bidirectional support mode, when the system detects that the power grid frequency increases and the power grid frequency decreases, fluctuation of the active power output by the direct current converter and fluctuation of the active power output by the inverter may be shown in FIG. 11 and FIG. 12.

Selection of the operating mode of the direct current converter may be set based on a user selection or may be set by receiving a selection instruction delivered by an upper layer. Certainly, the selection of the operating mode may be alternatively set in another manner. For example, a default operating mode is set for the direct current converter. When the photovoltaic power generation system is grid-connected, operation of the direct current converter may be controlled in the default operating mode.

Optionally, this application is applicable to grid-connected architectures of other new energy systems, for example, a wind power generation system and a water power generation system, where the new energy systems each are an application scenario in which a grid-connected inverter is disposed to perform grid connection based on generated electric energy; and is also applicable to a large-scale energy storage application scenario, a small/medium-scale distributed energy storage application scenario, and the like. This is merely an example for description, and a specific application scenario is not limited in this application. Optionally, this application is also applicable to an off-grid scenario of the new energy system.

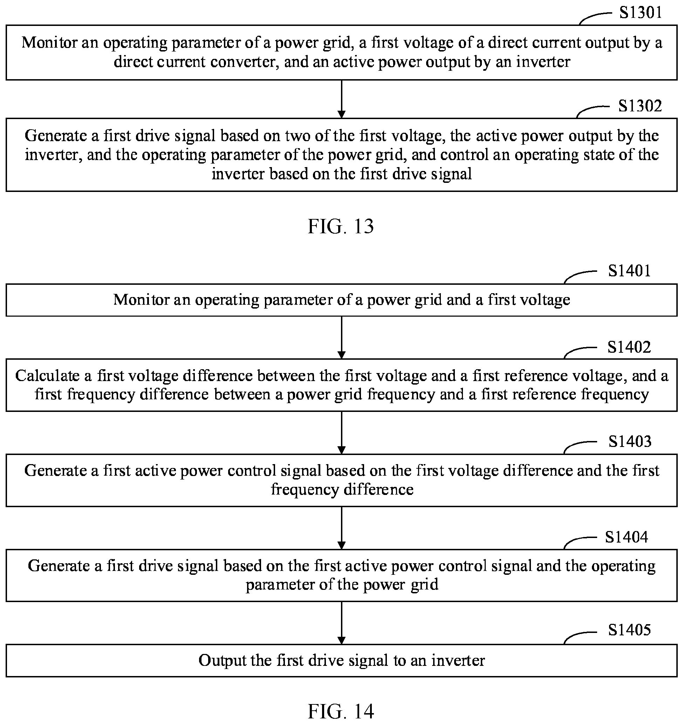

Based on the foregoing photovoltaic power generation system embodiments, an embodiment of this application further provides a photovoltaic power generation system control method, applied to a photovoltaic power generation system. The method may be performed by a controller in the photovoltaic power generation system. Specifically, the controller in the photovoltaic power generation system includes a first controller connected to an inverter. As shown in FIG. 13, the method provided in this embodiment of this application specifically includes the following steps.

Step 1301: Monitor an operating parameter of a power grid, a first voltage of a direct current output by a direct current converter, and an active power output by the inverter. The first voltage is a voltage amplitude of the direct current output by the direct current converter, and the operating parameter of the power grid includes one or more of a reactive current, an active current, a reactive power, an active power, a voltage amplitude, and a power grid frequency.

During specific implementation, the operating parameter of the power grid, the first voltage, and the active power output by the inverter may be obtained by using a corresponding alternating current sensor or direct current sensor, for example, a voltage sensor or a current sensor.

Step 1302: Generate a first drive signal based on two of the first voltage, the active power output by the inverter, and the operating parameter of the power grid, and control an operating state of the inverter based on the first drive signal. In a possible implementation, the generating a first drive signal based on two of the first voltage, the active power output by the inverter, and the operating parameter of the power grid includes: generating a first active power control signal based on a first voltage difference and a first frequency difference, where the first voltage difference is a difference between the first voltage and a first reference voltage, the first frequency difference is a difference between the power grid frequency and a first reference frequency, the first reference voltage is a rated voltage output by the direct current converter during normal operation of the power grid, and the first reference frequency is a rated frequency during normal operation of the power grid; and generating the first drive signal based on the first active power control signal and the operating parameter of the power grid.

In a possible implementation, the generating the first drive signal based on the first active power control signal and the operating parameter of the power grid includes: generating a first modulated wave signal based on the first active power control signal and the operating parameter of the power grid; and generating the first drive signal based on the first modulated wave signal and a first carrier signal, where the first carrier signal is a sine wave signal with a fixed period or a pulse signal.

In a possible implementation, the generating a first active power control signal based on a first voltage difference and a first frequency difference includes: obtaining the first power based on the first voltage difference and a first droop coefficient, where the first droop coefficient is determined based on a correspondence between the direct current voltage output by the direct current converter and the active power output by the direct current converter; obtaining a second power based on the first frequency difference and a second droop coefficient, where the second droop coefficient is determined based on a correspondence between the power grid frequency and the active power output by the inverter; and generating the first active power control signal based on the first power, the second power, and a third power, where the third power is an initial active power delivered by a plant management system, and the plant management system is configured to control an operating state of the photovoltaic power generation system.

In a possible implementation, the control method further includes: obtaining the power grid frequency and the first voltage in a process of controlling the operating state of the inverter based on the first drive signal; and when it is determined that the power grid frequency obtained this time is the same as a power grid frequency obtained at an adjacent time and that the first voltage obtained this time is greater than a first voltage obtained last time, adjusting the first drive signal, to increase an active power output by the photovoltaic power generation system, where the active power output by the photovoltaic power generation system is less than or equal to a first specified value after the first drive signal is adjusted, and the first specified value is a maximum active power output by the photovoltaic power generation system during normal operation of the power grid.

In a possible implementation, the control method further includes: obtaining the power grid frequency and the first voltage in a process of controlling the operating state of the inverter based on the first drive signal; and when it is determined that the first voltage obtained this time is the same as a first voltage obtained at an adjacent time and that the power grid frequency obtained this time is greater than a power grid frequency obtained last time, adjusting the first drive signal, to reduce an active power output by the photovoltaic power generation system, where the active power output by the photovoltaic power generation system is greater than or equal to a second specified value after the first drive signal is adjusted, and the second specified value is a minimum active power output by the photovoltaic power generation system during normal operation of the power grid.

In a possible implementation, the generating a first drive signal based on two of the first voltage, the active power output by the inverter, and the operating parameter of the power grid includes: generating a first voltage control signal based on a first power difference and a second frequency difference, where the first power difference is a difference between the active power output by the inverter and a first reference power, the second frequency difference is a difference between the power grid frequency and a second reference frequency, the first reference power is a rated active power output by the inverter during normal operation of the power grid, and the first reference frequency is a rated frequency during normal operation of the power grid; and generating the first drive signal based on the first voltage control signal and the operating parameter of the power grid.

In a possible implementation, the generating the first drive signal based on the first voltage control signal and the operating parameter of the power grid includes: generating a second modulated wave signal based on the first voltage control signal and the operating parameter of the power grid; and generating the first drive signal based on the second modulated wave signal and a second carrier signal, where the second carrier signal is a sine wave signal with a fixed period or a pulse signal.

In a possible implementation, the generating a first voltage control signal based on a first power difference and a second frequency difference includes: obtaining a first direct current voltage based on the first power difference and a third droop coefficient, where the third droop coefficient is determined based on a correspondence between an active power output by the direct current converter and the direct current output by the direct current converter; obtaining a second direct current voltage based on the second frequency difference and a fourth droop coefficient, where the fourth droop coefficient is determined based on a correspondence between the power grid frequency and the direct current output by the direct current converter; and generating the first voltage control signal based on the first direct current voltage, the second direct current voltage, and a third direct current voltage, where the third direct current voltage is an initial direct current voltage delivered by a plant management system, and the plant management system is configured to control an operating state of the photovoltaic power generation system.

In a possible implementation, the control method further includes: in a process of controlling the operating state of the inverter based on the first drive signal, obtaining the power grid frequency and the active power output by the inverter; and when it is determined that the active power, output by the inverter, obtained this time is the same as an active power, output by the inverter, obtained at an adjacent time and that the power grid frequency obtained this time is greater than a power grid frequency obtained last time, adjusting the first drive signal, to increase the first voltage output by the direct current converter and reduce an active power output by the photovoltaic power generation system. The active power output by the photovoltaic power generation system is greater than or equal to a third specified value after the first drive signal is adjusted, and the third specified value is a minimum active power output by the photovoltaic power generation system during normal operation of the power grid.

In a possible implementation, the control method further includes: in a process of controlling the operating state of the inverter based on the first drive signal, obtaining the power grid frequency and the active power output by the inverter; and when it is determined that the power grid frequency obtained this time is the same as a power grid frequency obtained at an adjacent time and that the active power, output by the inverter, obtained this time is greater than an active power, output by the inverter, obtained last time, adjusting the first drive signal, to increase the first voltage output by the direct current converter and reduce an active power output by the photovoltaic power generation system. The active power output by the photovoltaic power generation system is greater than or equal to a fourth specified value after the first drive signal is adjusted, and the fourth specified value is a minimum active power output by the photovoltaic power generation system during normal operation of the power grid.

In a possible implementation, the generating a first drive signal based on two of the first voltage, the active power output by the inverter, and the operating parameter of the power grid includes: generating a first frequency control signal based on a second power difference and a second voltage difference, where the second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid; and generating the first drive signal based on the first frequency control signal and the operating parameter of the power grid.

In a possible implementation, the generating the first drive signal based on the first frequency control signal and the operating parameter of the power grid includes: generating a third modulated wave signal based on the first frequency control signal and the operating parameter of the power grid; and generating the first drive signal based on the third modulated wave signal and a third carrier signal, where the third carrier signal is a sine wave signal with a fixed period or a pulse signal.

In a possible implementation, the generating a first frequency control signal based on a second power difference and a second voltage difference includes: generating a first frequency based on the second power difference and a fifth droop coefficient, where the fifth droop coefficient is determined based on a correspondence between the active power output by the inverter and the power grid frequency; generating a second frequency based on the second voltage difference and a sixth droop coefficient, where the sixth droop coefficient is determined based on a correspondence between the direct current output by the direct current converter and the power grid frequency; and generating the first frequency control signal based on the first frequency, the second frequency, and a third frequency, where the third frequency is an initial frequency delivered by a plant management system, and the plant management system is configured to control an operating state of the photovoltaic power generation system.

In a possible implementation, the control method further includes: in a process of controlling the operating state of the inverter based on the first drive signal, obtaining the first voltage and the active power output by the inverter; and when it is determined that the active power, output by the inverter, obtained this time is the same as an active power, output by the inverter, obtained at an adjacent time and that the first voltage obtained this time is greater than a first voltage obtained last time, adjusting the first drive signal, to increase a frequency of an alternating current output by the inverter and increase an active power output by the photovoltaic power generation system. After the first drive signal is adjusted, the active power output by the photovoltaic power generation system is less than or equal to a fifth specified value and the power grid frequency is less than or equal to a maximum frequency during normal operation of the power grid. The fifth specified value is a maximum active power output by the photovoltaic power generation system during normal operation of the power grid.

In a possible implementation, the control method further includes: in a process of controlling the operating state of the inverter based on the first drive signal, obtaining the first voltage and the active power output by the inverter; and when it is determined that the first voltage obtained this time is the same as a first voltage obtained at an adjacent time and that the active power, output by the inverter, obtained this time is greater than an active power, output by the inverter, obtained last time, adjusting the first drive signal, to reduce a frequency of an alternating current output by the inverter and reduce an active power output by the photovoltaic power generation system. After the first drive signal is adjusted, the active power output by the photovoltaic power generation system is greater than or equal to a sixth specified value and the power grid frequency is greater than or equal to a minimum frequency during normal operation of the power grid. The sixth specified value is a minimum active power output by the photovoltaic power generation system during normal operation of the power grid.

In a possible implementation, the method further includes: generating a second drive signal based on the first voltage and a third voltage difference, and controlling, based on the second drive signal, the active power output by the direct current converter, where the third voltage difference is a difference between a third reference voltage and the first voltage, and the third reference voltage is the rated voltage output by the direct current converter during normal operation of the power grid.

In a possible implementation, the generating a second drive signal based on the first voltage and a third voltage difference includes: determining an operating mode of the direct current converter, where the operating mode includes a unidirectional support mode and a bidirectional support mode; generating the third reference voltage based on the operating mode of the direct current converter and an operating parameter of the direct current converter, where the operating parameter of the direct current converter includes one or both of an input current and an input power; obtaining a fourth power based on the third voltage difference and a seventh droop coefficient, where the seventh droop coefficient is determined based on a correspondence between the output voltage of the direct current converter and the active power output by the direct current converter; determining a second active power control signal based on the fourth power and a maximum power MPPE; and generating the second drive signal based on the second active power control signal and an input parameter of the direct current converter.

In a possible implementation, the generating the second drive signal based on the second active power control signal and an input parameter of the direct current converter includes: generating a fourth modulated wave signal based on the second active power control signal and the input parameter of the direct current converter; and generating the second drive signal based on the fourth modulated wave signal and a fourth carrier signal, where the fourth carrier signal is a sine wave signal with a fixed period or a pulse signal.

In a possible implementation, the method further includes: determining the MPPE based on the operating parameter of the direct current converter.

In a possible implementation, the generating the third reference voltage based on the operating mode of the direct current converter and an operating parameter of the direct current converter includes: determining an additional reserved power based on the operating mode of the direct current converter; and generating the third reference voltage based on the operating parameter of the direct current converter and the additional reserved power.

With reference to the foregoing description, FIG. 14 is a schematic flowchart in which a first controller generates a first drive signal based on a first voltage and a power grid frequency. As shown in FIG. 14, the first controller performs the following steps.

Step 1401: Monitor an operating parameter of a power grid and a first voltage. The operating parameter of the power grid may include one or more of an active power, a reactive power, an active current, a reactive current, a power grid voltage, and the power grid frequency.

Step 1402: Calculate a first voltage difference between the first voltage and a first reference voltage, and a first frequency difference between the power grid frequency and a first reference frequency.

Step 1403: Generate a first active power control signal based on the first voltage difference and the first frequency difference.

Step 1404: Generate the first drive signal based on the first active power control signal and the operating parameter of the power grid.

Step 1405: Output the first drive signal to an inverter.

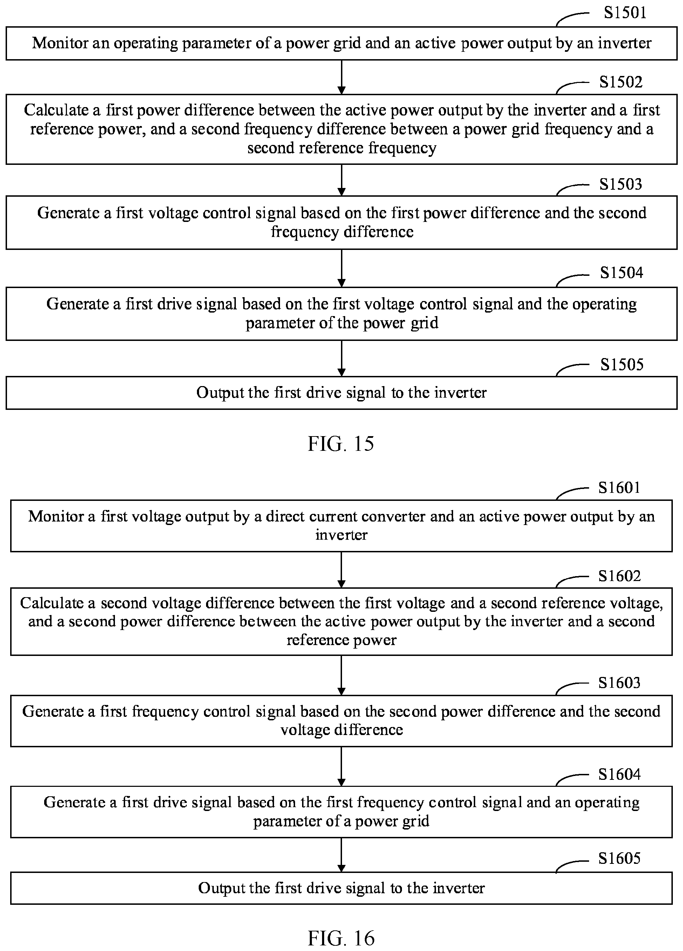

FIG. 15 is a schematic flowchart in which a first controller generates a first drive signal based on an active power output by an inverter and a power grid frequency. As shown in FIG. 15, the first controller performs the following steps.

Step 1501: Monitor an operating parameter of a power grid and the active power output by the inverter. The operating parameter of the power grid may include one or more of an active power, a reactive power, an active current, a reactive current, a power grid voltage, and the power grid frequency.

Step 1502: Calculate a first power difference between the active power output by the inverter and a first reference power, and a second frequency difference between the power grid frequency and a second reference frequency.

Step 1503: Generate a first voltage control signal based on the first power difference and the second frequency difference.

Step 1504: Generate the first drive signal based on the first voltage control signal and the operating parameter of the power grid.

Step 1505: Output the first drive signal to the inverter.

FIG. 16 is a schematic flowchart in which a first controller generates a first drive signal based on an active power output by an inverter and a first voltage output by a direct current converter. As shown in FIG. 16, the first controller performs the following steps.

Step 1601: Monitor the first voltage output by the direct current converter and the active power output by the inverter.

Step 1602: Calculate a second voltage difference between the first voltage and a second reference voltage, and a second power difference between the active power output by the inverter and a second reference power.

Step 1603: Generate a first frequency control signal based on the second power difference and the second voltage difference.

Step 1604: Generate the first drive signal based on the first frequency control signal and an operating parameter of a power grid.

Step 1605: Output the first drive signal to the inverter.

During actual application, the active power output by the inverter is supplied by the direct current converter. An output power also needs to be controlled at a direct current side, to implement frequency support. An inverter controller generates a second drive signal based on a second voltage difference between a reference voltage and a direct current bus voltage, and controls, based on the second drive signal, an active power output by the direct current converter.

Specifically, the inverter controller may obtain a fourth power based on the second voltage difference and a third droop coefficient, where the third droop coefficient is determined based on a correspondence between the output voltage of the direct current converter and the active power output by the direct current converter; determine a second active power based on the fourth power and a maximum power; and generate the second drive signal based on a second active power control signal and an input parameter of the direct current converter.

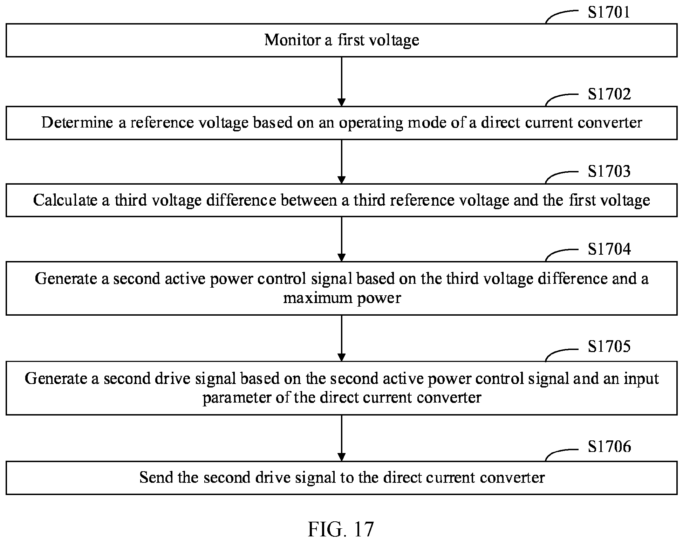

Further, a controller in a photovoltaic power generation system further includes a second controller connected to a direct current converter. As shown in FIG. 17, the method provided in this embodiment of this application further includes the following steps.

Step 1701: Monitor a first voltage.

Step 1702: Determine a reference voltage based on an operating mode of the direct current converter.

Step 1703: Calculate a third voltage difference between a third reference voltage and a first voltage.

Step 1704: Generate a second active power control signal based on the third voltage difference and a maximum power.

Step 1705: Generate a second drive signal based on the second active power control signal and an input parameter of the direct current converter.

Step 1706: Send the second drive signal to the direct current converter.

All or some of the foregoing embodiments may be implemented by software, hardware, firmware, or any combination thereof. When the software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), a semiconductor medium (for example, a solid state disk (solid state disk, SSD)), or the like.

An embodiment of this application further provides a readable storage medium, configured to store the methods or algorithms provided in the foregoing embodiments, for example, a random access memory (random access memory, RAM), a flash memory, a read-only memory (read-only memory, ROM), an EPROM memory, a nonvolatile read-only memory (Electronic Programmable ROM, EPROM), a register, a hard disk drive, a removable disk, or any other form of storage medium in the art.

Steps of the methods or algorithms described in embodiments of this application may be directly embedded into a control apparatus. The control apparatus may include a RAM memory, a flash memory, a ROM memory, an EPROM memory, a register, a hard disk drive, a removable disk, or any other form of storage medium in the art, and is configured to store the steps of the methods or algorithms provided in embodiments of this application. For example, the storage medium may be connected to a processing module or a processor (or a controller) in the control apparatus, so that the processing module or the processor (or the controller) may read information from the storage medium, and may store and write information to the storage medium. Optionally, the storage medium may be further integrated into the processing module and the processor (or the controller).

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that fall within the scope of this application.

It is clear that persons skilled in the art can make various modifications and variations to this application without departing from the scope of this application. This application is intended to cover these modifications and variations of this application provided that they fall within the scope of protection defined by the claims and their equivalent technologies.

**Claims**

1.  A photovoltaic power generation system, comprising:

a direct current converter, configured to connect an output of a photovoltaic module and perform voltage conversion on a direct current output by the photovoltaic module;

an inverter, configured to convert a direct current output by the direct current converter into an alternating current and output the alternating current to a power grid; and

a first controller, configured to generate a first drive signal based on two of a first voltage of the direct current output by the direct current converter, an active power output by the inverter, and an operating parameter of the power grid, and control an operating state of the inverter based on the first drive signal, wherein the first voltage is a voltage amplitude of the direct current output by the direct current converter, and the operating parameter of the power grid comprises one or more of a reactive current, an active current, a reactive power, an active power, a voltage amplitude, and a power grid frequency.

2. The system according to claim 1, wherein the first controller is specifically configured to:

generate a first active power control signal based on a first voltage difference and a first frequency difference, wherein the first voltage difference is a difference between the first voltage and a first reference voltage, the first frequency difference is a difference between the power grid frequency and a first reference frequency, the first reference voltage is a rated voltage output by the direct current converter during normal operation of the power grid, and the first reference frequency is a rated frequency during normal operation of the power grid; and

generate the first drive signal based on the first active power control signal and the operating parameter of the power grid.

3. The system according to claim 2, wherein the first controller is specifically configured to:

generate a first modulated wave signal based on the first active power control signal and the operating parameter of the power grid; and

generate the first drive signal based on the first modulated wave signal and a first carrier signal, wherein the first carrier signal is a sine wave signal with a fixed period or a pulse signal.

4. The system according to claim 2 or 3, wherein the first controller is specifically configured to:

obtain a first power based on the first voltage difference and a first droop coefficient, wherein the first droop coefficient is determined based on a correspondence between the direct current output by the direct current converter and the active power output by the inverter;

obtain a second power based on the first frequency difference and a second droop coefficient, wherein the second droop coefficient is determined based on a correspondence between the power grid frequency and the active power output by the inverter; and

generate the first active power control signal based on the first power, the second power, and a third power, wherein the third power is an initial active power delivered by a plant management system, and the plant management system is configured to control an operating state of the photovoltaic power generation system.

5. The system according to any one of claims 2 to 4, wherein the first controller is further configured to:

obtain the power grid frequency and the first voltage in a process of controlling the operating state of the inverter based on the first drive signal; and

when it is determined that the power grid frequency obtained this time is the same as a power grid frequency obtained at an adjacent time and that the first voltage obtained this time is greater than a first voltage obtained last time, adjust the first drive signal, to increase an active power output by the photovoltaic power generation system, wherein the active power output by the photovoltaic power generation system is less than or equal to a first specified value after the first drive signal is adjusted, and the first specified value is a maximum active power output by the photovoltaic power generation system during normal operation of the power grid.

6. The system according to any one of claims 2 to 4, wherein the first controller is further configured to:

obtain the power grid frequency and the first voltage in a process of controlling the operating state of the inverter based on the first drive signal; and

when it is determined that the first voltage obtained this time is the same as a first voltage obtained at an adjacent time and that the power grid frequency obtained this time is greater than a power grid frequency obtained last time, adjust the first drive signal, to reduce an active power output by the photovoltaic power generation system, wherein the active power output by the photovoltaic power generation system is greater than or equal to a second specified value after the first drive signal is adjusted, and the second specified value is a minimum active power output by the photovoltaic power generation system during normal operation of the power grid.

7. The system according to claim 1, wherein the first controller is specifically configured to:

generate a first voltage control signal based on a first power difference and a second frequency difference, wherein the first power difference is a difference between the active power output by the inverter and a first reference power, the second frequency difference is a difference between the power grid frequency and a second reference frequency, the first reference power is a rated active power output by the inverter during normal operation of the power grid, and the first reference frequency is a rated frequency during normal operation of the power grid; and
generate the first drive signal based on the first voltage control signal and the operating parameter of the power grid.

8. The system according to claim 7, wherein the first controller is specifically configured to:

generate a second modulated wave signal based on the first voltage control signal and the operating parameter of the power grid; and
generate the first drive signal based on the second modulated wave signal and a second carrier signal, wherein the second carrier signal is a sine wave signal with a fixed period or a pulse signal.

9. The system according to claim 7 or 8, wherein the first controller is specifically configured to:

obtain a first direct current voltage based on the first power difference and a third droop coefficient, wherein the third droop coefficient is determined based on a correspondence between an active power output by the direct current converter and the direct current output by the direct current converter;
obtain a second direct current voltage based on the second frequency difference and a fourth droop coefficient, wherein the fourth droop coefficient is determined based on a correspondence between the power grid frequency and the direct current output by the direct current converter; and
generate the first voltage control signal based on the first direct current voltage, the second direct current voltage, and a third direct current voltage, wherein the third direct current voltage is an initial direct current voltage delivered by a plant management system, and the plant management system is configured to control an operating state of the photovoltaic power generation system.

10. The system according to any one of claims 7 to 9, wherein the first controller is further configured to:

in a process of controlling the operating state of the inverter based on the first drive signal, obtain the power grid frequency and the active power output by the inverter; and
when it is determined that the active power, output by the inverter, obtained this time is the same as an active power, output by the inverter, obtained at an adjacent time and that the power grid frequency obtained this time is greater than a power grid frequency obtained last time, adjust the first drive signal, to increase the first voltage output by the direct current converter and reduce an active power output by the photovoltaic power generation system, wherein the active power output by the photovoltaic power generation system is greater than or equal to a third specified value after the first drive signal is adjusted, and the third specified value is a minimum active power output by the photovoltaic power generation system during normal operation of the power grid.

11. The system according to any one of claims 7 to 9, wherein the first controller is further configured to:

in a process of controlling the operating state of the inverter based on the first drive signal, obtain the power grid frequency and the active power output by the inverter; and
when it is determined that the power grid frequency obtained this time is the same as a power grid frequency obtained at an adjacent time and that the active power, output by the inverter, obtained this time is greater than an active power, output by the inverter, obtained last time, adjust the first drive signal, to increase the first voltage output by the direct current converter and reduce an active power output by the photovoltaic power generation system, wherein the active power output by the photovoltaic power generation system is greater than or equal to a fourth specified value after the first drive signal is adjusted, and the fourth specified value is a minimum active power output by the photovoltaic power generation system during normal operation of the power grid.

**12.** The system according to claim 1, wherein the first controller is specifically configured to:

generate a first frequency control signal based on a second power difference and a second voltage difference, wherein the second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid; and

generate the first drive signal based on the first frequency control signal and the operating parameter of the power grid.

**13.** The system according to claim 12, wherein the first controller is specifically configured to:

generate a third modulated wave signal based on the first frequency control signal and the operating parameter of the power grid; and

generate the first drive signal based on the third modulated wave signal and a third carrier signal, wherein the third carrier signal is a sine wave signal with a fixed period or a pulse signal.

**14.** The system according to claim 12 or 13, wherein the first controller is specifically configured to:

generate a first frequency based on the second power difference and a fifth droop coefficient, wherein the fifth droop coefficient is determined based on a correspondence between the active power output by the inverter and the power grid frequency;

generate a second frequency based on the second voltage difference and a sixth droop coefficient, wherein the sixth droop coefficient is determined based on a correspondence between the direct current output by the direct current converter and the power grid frequency; and

generate the first frequency control signal based on the first frequency, the second frequency, and a third frequency, wherein the third frequency is an initial frequency delivered by a plant management system, and the plant management system is configured to control an operating state of the photovoltaic power generation system.

**15.** The system according to any one of claims 12 to 14, wherein the first controller is further configured to:

in a process of controlling the operating state of the inverter based on the first drive signal, obtain the first voltage and the active power output by the inverter; and

when it is determined that the active power, output by the inverter, obtained this time is the same as an active power, output by the inverter, obtained at an adjacent time and that the first voltage obtained this time is greater than a first voltage obtained last time, adjust the first drive signal, to increase a frequency of the alternating current output by the inverter and increase an active power output by the photovoltaic power generation system, wherein after the first drive signal is adjusted, the active power output by the photovoltaic power generation system is less than or equal to a fifth specified value and the power grid frequency is less than or equal to a maximum frequency during normal operation of the power grid; and the fifth specified value is a maximum active power output by the photovoltaic power generation system during normal operation of the power grid.

**16.** The system according to any one of claims 12 to 14, wherein the first controller is further configured to:

in a process of controlling the operating state of the inverter based on the first drive signal, obtain the first voltage and the active power output by the inverter; and

when it is determined that the first voltage obtained this time is the same as a first voltage obtained at an adjacent time and that the active power, output by the inverter, obtained this time is greater than an active power, output by the inverter, obtained last time, adjust the first drive signal, to reduce a frequency of the alternating current output by the inverter and reduce an active power output by the photovoltaic power generation system, wherein after the first drive signal is adjusted, the active power output by the photovoltaic power generation system is greater than or equal to a sixth specified value and the power grid frequency is greater than or equal to a minimum frequency during normal operation of the power grid; and the sixth specified value is a minimum active power output by the photovoltaic power generation system during normal operation of the power grid.

**17.** The system according to any one of claims 1 to 16, wherein the photovoltaic power generation system further comprises a second controller connected to the direct current converter and configured to: generate a second drive signal based on the first voltage and a third voltage difference, and control, based on the second drive signal, the active power output by the direct current converter, wherein the third voltage difference is a difference between a third reference voltage and the first voltage, and the third reference voltage is the rated voltage output by the direct current converter during normal operation of the power grid.

18. The system according to claim 17, wherein the second controller is specifically configured to:

determine an operating mode of the direct current converter, wherein the operating mode comprises a unidirectional support mode and a bidirectional support mode;
generate the third reference voltage based on the operating mode of the direct current converter and an operating parameter of the direct current converter, wherein the operating parameter of the direct current converter comprises one or more of an input current, an input voltage, and an input power;
obtain a fourth power based on the third voltage difference and a seventh droop coefficient, wherein the seventh droop coefficient is determined based on a correspondence between the output voltage of the direct current converter and the active power output by the direct current converter;
determine a second active power control signal based on the fourth power and a maximum power MPPE; and
generate the second drive signal based on the second active power control signal and an input parameter of the direct current converter.

19. The system according to claim 18, wherein the second controller is specifically configured to:

generate a fourth modulated wave signal based on the second active power control signal and the input parameter of the direct current converter; and
generate the second drive signal based on the fourth modulated wave signal and a fourth carrier signal, wherein the fourth carrier signal is a sine wave signal with a fixed period or a pulse signal.

20. The system according to claim 18 or 19, wherein the second controller is further configured to calculate the MPPE based on the operating parameter of the direct current converter.

21. The system according to any one of claims 17 to 20, wherein the direct current controller is specifically configured to:

determine an additional reserved power based on the operating mode of the direct current converter; and
generate the third reference voltage based on the operating parameter of the direct current converter and the additional reserved power.

22. A photovoltaic power generation system control method, applied to a photovoltaic power generation system, comprising:

monitoring an operating parameter of a power grid, a first voltage of a direct current output by a direct current converter, and an active power output by an inverter; and
generating a first drive signal based on two of the first voltage, the active power output by the inverter, and the operating parameter of the power grid, and controlling an operating state of the inverter based on the first drive signal, wherein the first voltage is a voltage amplitude of the direct current output by the inverter, and the operating parameter of the power grid comprises one or more of a reactive current, an active current, a reactive power, an active power, a voltage amplitude, and a power grid frequency.

23. The method according to claim 22, wherein the generating a first drive signal based on two of the first voltage, the active power output by the inverter, and the operating parameter of the power grid comprises:

generating a first active power control signal based on a first voltage difference and a first frequency difference, wherein the first voltage difference is a difference between the first voltage and a first reference voltage, the first frequency difference is a difference between the power grid frequency and a first reference frequency, the first reference voltage is a rated voltage output by the direct current converter during normal operation of the power grid, and the first reference frequency is a rated frequency during normal operation of the power grid; and
generating the first drive signal based on the first active power control signal and the operating parameter of the power grid.

24. The method according to claim 23, wherein the generating the first drive signal based on the first active power control signal and the operating parameter of the power grid comprises:

generating a first modulated wave signal based on the first active power control signal and the operating parameter of the power grid; and
generating the first drive signal based on the first modulated wave signal and a first carrier signal, wherein the first carrier signal is a sine wave signal with a fixed period or a pulse signal.

25. The method according to claim 23 or 24, wherein the generating a first active power control signal based on a first voltage difference and a first frequency difference and generating the first drive signal comprises:

obtaining a first power based on the first voltage difference and a first droop coefficient, wherein the first droop coefficient is determined based on a correspondence between the direct current voltage output by the direct current converter and the active power output by the direct current converter;
obtaining a second power based on the first frequency difference and a second droop coefficient, wherein the second droop coefficient is determined based on a correspondence between the power grid frequency and the active power output by the inverter; and
generating the first active power control signal based on the first power, the second power, and a third power, wherein the third power is an initial active power delivered by a plant management system, and the plant management system is configured to control an operating state of the photovoltaic power generation system.

26. The method according to any one of claims 23 to 25, further comprising:

obtaining the power grid frequency and the first voltage in a process of controlling the operating state of the inverter based on the first drive signal; and
when it is determined that the power grid frequency obtained this time is the same as a power grid frequency obtained at an adjacent time and that the first voltage obtained this time is greater than a first voltage obtained last time, adjusting the first drive signal, to increase an active power output by the photovoltaic power generation system, wherein the active power output by the photovoltaic power generation system is less than or equal to a first specified value after the first drive signal is adjusted, and the first specified value is a maximum active power output by the photovoltaic power generation system during normal operation of the power grid.

27. The method according to any one of claims 23 to 25, further comprising:

obtaining the power grid frequency and the first voltage in a process of controlling the operating state of the inverter based on the first drive signal; and
when it is determined that the first voltage obtained this time is the same as a first voltage obtained at an adjacent time and that the power grid frequency obtained this time is greater than a power grid frequency obtained last time, adjusting the first drive signal, to reduce an active power output by the photovoltaic power generation system, wherein the active power output by the photovoltaic power generation system is greater than or equal to a second specified value after the first drive signal is adjusted, and the second specified value is a minimum active power output by the photovoltaic power generation system during normal operation of the power grid.

28. The method according to claim 22, wherein the generating a first drive signal based on two of the first voltage, the active power output by the inverter, and the operating parameter of the power grid comprises:

generating a first voltage control signal based on a first power difference and a second frequency difference, wherein the first power difference is a difference between the active power output by the inverter and a first reference power, the second frequency difference is a difference between the power grid frequency and a second reference frequency, the first reference power is a rated active power output by the inverter during normal operation of the power grid, and the first reference frequency is a rated frequency during normal operation of the power grid; and
generating the first drive signal based on the first voltage control signal and the operating parameter of the power grid.

29. The method according to claim 28, wherein the generating the first drive signal based on the first voltage control signal and the operating parameter of the power grid comprises:

generating a second modulated wave signal based on the first voltage control signal and the operating parameter of the power grid; and

generating the first drive signal based on the second modulated wave signal and a second carrier signal, wherein the second carrier signal is a sine wave signal with a fixed period or a pulse signal.

30. The method according to claim 28 or 29, wherein the generating a first voltage control signal based on a first power difference and a second frequency difference comprises:

obtaining a first direct current voltage based on the first power difference and a third droop coefficient, wherein the third droop coefficient is determined based on a correspondence between an active power output by the direct current converter and the direct current output by the direct current converter;

obtaining a second direct current voltage based on the second frequency difference and a fourth droop coefficient, wherein the fourth droop coefficient is determined based on a correspondence between the power grid frequency and the direct current output by the direct current converter; and

generating the first voltage control signal based on the first direct current voltage, the second direct current voltage, and a third direct current voltage, wherein the third direct current voltage is an initial direct current voltage delivered by a plant management system, and the plant management system is configured to control an operating state of the photovoltaic power generation system.

31. The method according to any one of claims 28 to 30, further comprising:

in a process of controlling the operating state of the inverter based on the first drive signal, obtaining the power grid frequency and the active power output by the inverter; and

when it is determined that the active power, output by the inverter, obtained this time is the same as an active power, output by the inverter, obtained at an adjacent time and that the power grid frequency obtained this time is greater than a power grid frequency obtained last time, adjusting the first drive signal, to increase the first voltage output by the direct current converter and reduce an active power output by the photovoltaic power generation system, wherein the active power output by the photovoltaic power generation system is greater than or equal to a third specified value after the first drive signal is adjusted, and the third specified value is a minimum active power output by the photovoltaic power generation system during normal operation of the power grid.

32. The method according to any one of claims 28 to 30, further comprising:

in a process of controlling the operating state of the inverter based on the first drive signal, obtaining the power grid frequency and the active power output by the inverter; and

when it is determined that the power grid frequency obtained this time is the same as a power grid frequency obtained at an adjacent time and that the active power, output by the inverter, obtained this time is greater than an active power, output by the inverter, obtained last time, adjusting the first drive signal, to increase the first voltage output by the direct current converter and reduce an active power output by the photovoltaic power generation system, wherein the active power output by the photovoltaic power generation system is greater than or equal to a fourth specified value after the first drive signal is adjusted, and the fourth specified value is a minimum active power output by the photovoltaic power generation system during normal operation of the power grid.

33. The method according to claim 22, wherein the generating a first drive signal based on two of the first voltage, the active power output by the inverter, and the operating parameter of the power grid comprises:

generating a first frequency control signal based on a second power difference and a second voltage difference, wherein the second power difference is a difference between the active power output by the inverter and a second reference power, the second voltage difference is a difference between the first voltage and a second reference voltage, the second reference power is a rated active power output by the inverter during normal operation of the power grid, and the second reference voltage is a rated voltage output by the direct current converter during normal operation of the power grid; and

generating the first drive signal based on the first frequency control signal and the operating parameter of the power grid.

34. The method according to claim 33, wherein the generating the first drive signal based on the first frequency control signal and the operating parameter of the power grid comprises:

generating a third modulated wave signal based on the first frequency control signal and the operating parameter of the power grid; and

generating the first drive signal based on the third modulated wave signal and a third carrier signal, wherein the third carrier signal is a sine wave signal with a fixed period or a pulse signal.

35. The method according to claim 33 or 34, wherein the generating a first frequency control signal based on a second power difference and a second voltage difference comprises:

generating a first frequency based on the second power difference and a fifth droop coefficient, wherein the fifth droop coefficient is determined based on a correspondence between the active power output by the inverter and the power grid frequency;

generating a second frequency based on the second voltage difference and a sixth droop coefficient, wherein the sixth droop coefficient is determined based on a correspondence between the direct current output by the direct current converter and the power grid frequency; and

generating the first frequency control signal based on the first frequency, the second frequency, and a third frequency, wherein the third frequency is an initial frequency delivered by a plant management system, and the plant management system is configured to control an operating state of the photovoltaic power generation system.

36. The method according to any one of claims 33 to 35, further comprising:

in a process of controlling the operating state of the inverter based on the first drive signal, obtaining the first voltage and the active power output by the inverter; and

when it is determined that the active power, output by the inverter, obtained this time is the same as an active power, output by the inverter, obtained at an adjacent time and that the first voltage obtained this time is greater than a first voltage obtained last time, adjusting the first drive signal, to increase a frequency of an alternating current output by the inverter and increase an active power output by the photovoltaic power generation system, wherein after the first drive signal is adjusted, the active power output by the photovoltaic power generation system is less than or equal to a fifth specified value and the power grid frequency is less than or equal to a maximum frequency during normal operation of the power grid; and the fifth specified value is a maximum active power output by the photovoltaic power generation system during normal operation of the power grid.

37. The method according to any one of claims 33 to 35, further comprising:

in a process of controlling the operating state of the inverter based on the first drive signal, obtaining the first voltage and the active power output by the inverter; and

when it is determined that the first voltage obtained this time is the same as a first voltage obtained at an adjacent time and that the active power, output by the inverter, obtained this time is greater than an active power, output by the inverter, obtained last time, adjusting the first drive signal, to reduce a frequency of an alternating current output by the inverter and reduce an active power output by the photovoltaic power generation system, wherein after the first drive signal is adjusted, the active power output by the photovoltaic power generation system is greater than or equal to a sixth specified value and the power grid frequency is greater than or equal to a minimum frequency during normal operation of the power grid; and the sixth specified value is a minimum active power output by the photovoltaic power generation system during normal operation of the power grid.

38. The method according to any one of claims 22 to 37, wherein the method further comprises:
generating a second drive signal based on the first voltage and a third voltage difference, and controlling, based on the second drive signal, the active power output by the direct current converter, wherein the third voltage difference is a difference between a third reference voltage and the first voltage, and the third reference voltage is the rated voltage output by the direct current converter during normal operation of the power grid.

39. The method according to claim 28, wherein the generating a second drive signal based on the first voltage and a third voltage difference comprises:

determining an operating mode of the direct current converter, wherein the operating mode comprises a unidirectional support mode and a bidirectional support mode;

generating the third reference voltage based on the operating mode of the direct current converter and an operating parameter of the direct current converter, wherein the operating parameter of the direct current converter comprises one or both of an input current and an input power;

obtaining a fourth power based on the third voltage difference and a seventh droop coefficient, wherein the seventh droop coefficient is determined based on a correspondence between the output voltage of the direct current converter and the active power output by the direct current converter;

determining a second active power control signal based on the fourth power and a maximum power MPPE; and

generating the second drive signal based on the second active power control signal and an input parameter of the direct current converter.

40. The method according to claim 39, wherein the generating the second drive signal based on the second active power control signal and an input parameter of the direct current converter comprises:

generating a fourth modulated wave signal based on the second active power control signal and the input parameter of the direct current converter; and

generating the second drive signal based on the fourth modulated wave signal and a fourth carrier signal, wherein the fourth carrier signal is a sine wave signal with a fixed period or a pulse signal.

41. The method according to claim 39 or 40, wherein the method further comprises: determining the MPPE based on the operating parameter of the direct current converter.

42. The method according to any one of claims 39 to 41, wherein the generating the third reference voltage based on the operating mode of the direct current converter and an operating parameter of the direct current converter comprises:

determining an additional reserved power based on the operating mode of the direct current converter; and

generating the third reference voltage based on the operating parameter of the direct current converter and the additional reserved power.

Photovoltaic power generation system

Photovoltaic module · · · Direct current converter → Inverter → Power grid

Inverter → Controller → Plant management system

FIG. 1

Photovoltaic power generation system 20

Photovoltaic module 24 · · · Direct current converter 21 → Inverter 22 → Power grid

Inverter 22 → First controller 23

FIG. 2

FIG. 3

FIG. 4

FIG. 5

FIG. 6

FIG. 7

P_INV

P_BST

Ubus

Ubusref_BST

Time T

Operating condition of a sudden increase of a system frequency

FIG. 8

Operating condition of a sudden decrease of a system frequency

FIG. 9

FIG. 10

Operating condition of a sudden increase of a system frequency

FIG. 11

Operating condition of a sudden decrease of a system frequency

FIG. 12

S1301

Monitor an operating parameter of a power grid, a first voltage of a direct current output by a direct current converter, and an active power output by an inverter

S1302

Generate a first drive signal based on two of the first voltage, the active power output by the inverter, and the operating parameter of the power grid, and control an operating state of the inverter based on the first drive signal

FIG. 13

S1401

Monitor an operating parameter of a power grid and a first voltage

S1402

Calculate a first voltage difference between the first voltage and a first reference voltage, and a first frequency difference between a power grid frequency and a first reference frequency

S1403

Generate a first active power control signal based on the first voltage difference and the first frequency difference

S1404

Generate a first drive signal based on the first active power control signal and the operating parameter of the power grid

S1405

Output the first drive signal to an inverter

FIG. 14

S1501

Monitor an operating parameter of a power grid and an active power output by an inverter

S1502

Calculate a first power difference between the active power output by the inverter and a first reference power, and a second frequency difference between a power grid frequency and a second reference frequency

S1503

Generate a first voltage control signal based on the first power difference and the second frequency difference

S1504

Generate a first drive signal based on the first voltage control signal and the operating parameter of the power grid

S1505

Output the first drive signal to the inverter

FIG. 15

S1601

Monitor a first voltage output by a direct current converter and an active power output by an inverter

S1602

Calculate a second voltage difference between the first voltage and a second reference voltage, and a second power difference between the active power output by the inverter and a second reference power

S1603

Generate a first frequency control signal based on the second power difference and the second voltage difference

S1604

Generate a first drive signal based on the first frequency control signal and an operating parameter of a power grid

S1605

Output the first drive signal to the inverter

FIG. 16

S1701

Monitor a first voltage

S1702

Determine a reference voltage based on an operating mode of a direct current converter

S1703

Calculate a third voltage difference between a third reference voltage and the first voltage

S1704

Generate a second active power control signal based on the third voltage difference and a maximum power

S1705

Generate a second drive signal based on the second active power control signal and an input parameter of the direct current converter

S1706

Send the second drive signal to the direct current converter

FIG. 17

## INTERNATIONAL SEARCH REPORT

| International application No. |
|---|
| **PCT/CN2023/099663** |

**A. CLASSIFICATION OF SUBJECT MATTER**

H02J3/38(2006.01)i

According to International Patent Classification (IPC) or to both national classification and IPC

**B. FIELDS SEARCHED**

Minimum documentation searched (classification system followed by classification symbols)

IPC: H02J3/-

Documentation searched other than minimum documentation to the extent that such documents are included in the fields searched

Electronic data base consulted during the international search (name of data base and, where practicable, search terms used)

CNABS; CNTXT; DWPI; EPTXT; USTXT; WOTXT; CNKI; IEEE: 光伏, 直流, 电压, 功率, 频率, 逆变器, PV, DC, voltage, power, frequency, inverter

**C. DOCUMENTS CONSIDERED TO BE RELEVANT**

| Category* | Citation of document, with indication, where appropriate, of the relevant passages | Relevant to claim No. |
|---|---|---|
| PX | CN 115411771 A (HUAWEI DIGITAL POWER TECHNOLOGIES CO., LTD.) 29 November 2022 (2022-11-29) description, paragraphs 1-214, and figures 1-17 | 1-42 |
| X | CN 107591834 A (NORTH CHINA ELECTRIC POWER UNIVERSITY (BAODING) et al.) 16 January 2018 (2018-01-16) description, paragraphs 34-54, and figures 1-3 | 1, 12-16, 22, 33-37 |
| Y | CN 107591834 A (NORTH CHINA ELECTRIC POWER UNIVERSITY (BAODING) et al.) 16 January 2018 (2018-01-16) description, paragraphs 34-54, and figures 1-3 | 17-21, 38-42 |
| A | CN 107591834 A (NORTH CHINA ELECTRIC POWER UNIVERSITY (BAODING) et al.) 16 January 2018 (2018-01-16) description, paragraphs 34-54, and figures 1-3 | 2-11, 23-32 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **01 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 572 071 A1

## INTERNATIONAL SEARCH REPORT

| International application No. |
|---|
| **PCT/CN2023/099663** |

### C. DOCUMENTS CONSIDERED TO BE RELEVANT

| Category* | Citation of document, with indication, where appropriate, of the relevant passages | Relevant to claim No. |
|---|---|---|
| X | 胡玉华 (HU, Yuhua). "级联H桥光伏逆变器及其有功备用式虚拟同步控制研究 (Non-official translation: Study of Cascaded H-bridge Photovoltaic Inverters and Their Active Standby Virtual Synchronous Control)" 中国优秀硕士学位论文全文数据库工业科技II辑 (*Engineering Science & Technology II, China Master's Theses Full-text Database*), 28 February 2021 (2021-02-28), pages C042-777 ISSN: 1674-0246, chapter 4 | 1-6, 22-27 |
| Y | 胡玉华 (HU, Yuhua). "级联H桥光伏逆变器及其有功备用式虚拟同步控制研究 (Non-official translation: Study of Cascaded H-bridge Photovoltaic Inverters and Their Active Standby Virtual Synchronous Control)" 中国优秀硕士学位论文全文数据库工业科技II辑 (*Engineering Science & Technology II, China Master's Theses Full-text Database*), 28 February 2021 (2021-02-28), pages C042-777 ISSN: 1674-0246, chapter 4 | 17-21, 38-42 |
| A | 胡玉华 (HU, Yuhua). "级联H桥光伏逆变器及其有功备用式虚拟同步控制研究 (Non-official translation: Study of Cascaded H-bridge Photovoltaic Inverters and Their Active Standby Virtual Synchronous Control)" 中国优秀硕士学位论文全文数据库工业科技II辑 (*Engineering Science & Technology II, China Master's Theses Full-text Database*), 28 February 2021 (2021-02-28), pages C042-777 ISSN: 1674-0246, chapter 4 | 7-16, 28-37 |
| Y | 杜永安 等 (DU, Yong'an et al.). "光伏发电接入柔直互联区域调频策略 (Frequency Regulation for PV Generation Connected to an Interconnection Area by VSC-HVDC)" 电力系统保护与控制 (*Power System Protection and Control*), 16 March 2021 (2021-03-16), section 3 | 17-21, 38-42 |
| A | JP 2016119820 A (FUJI ELECTRIC CO., LTD.) 30 June 2016 (2016-06-30) entire document | 1-42 |

Form PCT/ISA/210 (second sheet) (July 2022)

44

## INTERNATIONAL SEARCH REPORT
### Information on patent family members

| International application No. |
|---|
| **PCT/CN2023/099663** |

| Patent document cited in search report | | | Publication date (day/month/year) | Patent family member(s) | | | Publication date (day/month/year) |
|---|---|---|---|---|---|---|---|
| CN | 115411771 | A | 29 November 2022 | None | | | |
| CN | 107591834 | A | 16 January 2018 | None | | | |
| JP | 2016119820 | A | 30 June 2016 | JP | 6455661 | B2 | 23 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211024308